(19) Europäisches Patentamt
European Patent Office
Office européen des brevets

(11) EP 4 772 277 A1

(12) EUROPEAN PATENT APPLICATION
published in accordance with Art. 153(4) EPC

(43) Date of publication:
**08.07.2026 Bulletin 2026/28**

(21) Application number: **24859832.8**

(22) Date of filing: **28.08.2024**

(51) International Patent Classification (IPC):
***B01J 35/39*** *(2024.01)* ***B01J 31/36*** *(2006.01)*
***C01B 3/04*** *(2026.01)* ***C01B 13/02*** *(2006.01)*

(52) Cooperative Patent Classification (CPC):
**B01J 31/36; B01J 35/39; C01B 3/04; C01B 13/02;**
Y02E 60/36

(86) International application number:
**PCT/JP2024/030724**

(87) International publication number:
**WO 2025/047802 (06.03.2025 Gazette 2025/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.08.2023 JP 2023141454**

(71) Applicant: **Kao Corporation**
**Tokyo 103-8210 (JP)**

(72) Inventors:
- **MIYASATO, Ryo**
  **Tokyo 103-8210 (JP)**
- **YOSHIDA, Marina**
  **Tokyo 103-8210 (JP)**

(74) Representative: **Hoffmann Eitle**
**Patent- und Rechtsanwälte PartmbB**
**Arabellastraße 30**
**81925 München (DE)**

# (54) JUNCTION PHOTOCATALYST

(57) The present invention provides a heterojunction photocatalyst exhibiting higher catalytic activity and a superior degree of freedom in molecular design than that of a conventional heterojunction photocatalyst. A heterojunction photocatalyst including a solid state mediator between a hydrogen-evolution photocatalyst containing an organic semiconductor and an oxygen-evolution photocatalyst, in which the hydrogen-evolution photocatalyst and the solid state mediator are joined, and the oxygen-evolution photocatalyst and the solid state mediator are joined.

EP 4 772 277 A1

**Description**

TECHNICAL FIELD

The present invention relates to a heterojunction photocatalyst having a solid state mediator between a hydrogen-evolution photocatalyst containing an organic semiconductor and an oxygen-evolution photocatalyst, a photocatalyst composite having the heterojunction photocatalyst on a substrate, a method for producing hydrogen, and a method for producing a heterojunction photocatalyst.

BACKGROUND ART

In recent years, a technique for producing hydrogen and oxygen by water splitting using a photocatalyst and sunlight has attracted attention. When water splitting is occurred by a photocatalyst, it is preferable to use a photocatalyst that catalyzes both a reduction of water (reduction of protons) and an oxidation of water.

Non-Patent Document 1 discloses that a covalent organic framework (COF) is used in a reduction reaction of protons to produce hydrogen. However, it has been reported that hydrogen can be produced only in the presence of a specific sacrificial reagent such as ascorbic acid. In Non-Patent Document 2, a water splitting reaction using COF as a hydrogen-evolution photocatalyst and $BiFeO_3$ as an oxygen-evolution photocatalyst has been studied.

On the other hand, Patent Document 1 proposes a photocatalyst layer including: first photocatalyst particles that are visible light-responsive for hydrogen generation; second photocatalyst particles that are visible light-responsive for oxygen generation; and conductive particles that are provided between the first photocatalyst particles and the second photocatalyst particles, have a Fermi level at a position more negative than an electron energy level at an upper end of a valence band of the first photocatalyst particles, and have a Fermi level at a position more positive than an electron energy level at a lower end of a conduction band of the second photocatalyst particles, and are capable of storing electrons and holes, in which the conductive particles are disposed so as to be connected to the first photocatalyst particles and the second photocatalyst particles.

Patent Document 2 discloses a heterojunction photocatalyst having a solid state mediator between a hydrogen-evolution photocatalyst and an oxygen-evolution photocatalyst, a photocatalyst composite having the heterojunction photocatalyst on a substrate, a method for producing the heterojunction photocatalyst, and a method for producing hydrogen using the heterojunction photocatalyst or the photocatalyst composite.

PRIOR ART DOCUMENT

PATENT DOCUMENT

Patent Document 1: JP-A-2017-124394
Patent Document 2: WO 2022/045283 A

NON-PATENT DOCUMENT

Non-Patent Document 1: Chunzhi Li et al., Nature Communications, 2022, 13, 2357
Non-Patent Document 2: M. L. Xu et al., Angew. Chem. Int. Ed., 2022, 61, e202210700

SUMMARY OF THE INVENTION

PROBLEMS TO BE SOLVED BY THE INVENTION

A heterojunction photocatalyst in which a hydrogen-evolution photocatalyst and an oxygen-evolution photocatalyst are joined, and a heterojunction photocatalyst in which a hydrogen-evolution photocatalyst and an oxygen-evolution photocatalyst are joined via a metal or a metal oxide have a very simple configuration, and exhibit catalytic activity in a decomposition reaction of water or the like under visible light irradiation. In recent years, the heterojunction photocatalyst is required to exhibit further improved catalytic activity.

Further, as a conventional heterojunction photocatalyst, a hydrogen-evolution photocatalyst using an inorganic semiconductor containing an inorganic compound, and the like are used. However, it has been found that molecular

design for exhibiting required performance is not easy, and for example, there are many restrictions on design of inorganic compounds having a small band gap and a wide light absorption range.

On the other hand, if a so-called organic semiconductor such as COF can be used as the hydrogen-evolution photocatalyst, the degree of freedom in molecular design is high, so that narrowing of band gap and improvement of catalytic activity can be achieved.

However, since an organic semiconductor has low affinity for an inorganic semiconductor, a metal, or a metal oxide, it is difficult to join the organic semiconductor to these materials, and it is not easy to produce a heterojunction photocatalyst. Therefore, a hydrogen-evolution photocatalyst using an organic semiconductor is hardly utilized.

The present invention has been made in view of the above circumstances, and provides a heterojunction photocatalyst exhibiting higher catalytic activity and a higher degree of freedom in molecular design than that of a conventional heterojunction photocatalyst.

MEANS FOR SOLVING THE PROBLEMS

As a result of an earnest study, the inventors of the present invention have found out that the problems can be solved by the following heterojunction photocatalyst.

In other words, the present invention relates to the following 1. to 4.

1. A heterojunction photocatalyst comprising a solid state mediator between a hydrogen-evolution photocatalyst containing an organic semiconductor and an oxygen-evolution photocatalyst, wherein the hydrogen-evolution photocatalyst and the solid state mediator are joined, and the oxygen-evolution photocatalyst and the solid state mediator are joined.
2. A photocatalyst composite comprising the heterojunction photocatalyst on a substrate.
3. A method for producing hydrogen, comprising irradiating the heterojunction photocatalyst or the photocatalyst composite with light in the presence of water or alcohol.
4. A method for producing the heterojunction photocatalyst, comprising joining the hydrogen-evolution photocatalyst and the solid state mediator and/or joining the oxygen-evolution photocatalyst and the solid state mediator using an ionic polymer as a joining agent.

EFFECT OF THE INVENTION

In the heterojunction photocatalyst of the present invention, the hydrogen-evolution photocatalyst contains an organic semiconductor, whereby a heterojunction photocatalyst containing a hydrogen-evolution photocatalyst excellent in the degree of freedom in molecular design can be obtained. In addition, the catalytic activity for water splitting reaction is improved, and water can be split into oxygen and hydrogen with high water splitting reaction efficiency, which is useful.

BRIEF DESCRIPTION OF THE DRAWINGS

Fig. 1 is a schematic view of a layer structure formed by a hexagonal COF.
Fig. 2 is an SEM image of Au-$BiVO_4$ used in Example 1.
Fig. 3 is an SEM image of a COF used in Example 1.
Fig. 4 is a powder X-ray diffraction pattern of a COF used in Example 1.
Fig. 5 is an SEM image of a heterojunction photocatalyst of Example 1.
Fig. 6 is an SEM image of a COF used in Example 5.
Fig. 7 is a powder X-ray diffraction pattern of a COF used in Example 5.
Fig. 8 is an SEM image of a heterojunction photocatalyst of Example 5.

MODE FOR CARRYING OUT THE INVENTION

The present invention is described in detail below.

<Heterojunction photocatalyst>

The heterojunction photocatalyst of the present invention has a solid state mediator between a hydrogen-evolution photocatalyst containing an organic semiconductor and an oxygen-evolution photocatalyst, in which the hydrogen-evolution photocatalyst and the solid state mediator are joined, and the oxygen-evolution photocatalyst and

the solid state mediator are joined.

Specifically, the hydrogen-evolution photocatalyst containing an organic semiconductor is directly or indirectly joined to another part of the solid state mediator.

The oxygen-evolution photocatalyst is directly or indirectly joined to a part of the solid state mediator.

Further, the hydrogen-evolution photocatalyst and the oxygen-evolution photocatalyst are joined via at least the solid state mediator.

Examples of the joining agent that can be used at the time of joining include an ionic polymer utilizing ionic bonding.

The solid state mediator and the hydrogen-evolution photocatalyst are preferably joined to each other via an ionic polymer, and it is preferable that the solid state mediator has an ionic group, and the solid state mediator and the hydrogen-evolution photocatalyst are joined to each other via the ionic group of the solid state mediator (preferably the ionic group introduced into the solid state mediator) and an ionic polymer having a charge opposite to that of the ionic group.

An aspect of the heterojunction photocatalyst of the present invention is, for example, a heterojunction photocatalyst in which a solid state mediator has an ionic group, a hydrogen-evolution photocatalyst has the ionic polymer having a charge opposite to the charge of the ionic group, and the solid state mediator and the hydrogen-evolution photocatalyst are joined to each other by ionic bonding between the ionic group and the ionic polymer.

An aspect of the heterojunction photocatalyst of the present invention is, for example, a heterojunction photocatalyst in which a solid state mediator has an ionic group, a hydrogen-evolution photocatalyst has an ionic polymer A and further an ionic polymer B having a charge opposite to the charge of the ionic group via the ionic polymer A, and the solid state mediator and the hydrogen-evolution photocatalyst are joined to each other by ionic bonding between the ionic group and the ionic polymer B.

Further, an aspect of the heterojunction photocatalyst of the present invention is, for example, a heterojunction photocatalyst in which a solid state mediator has an ionic group and further an ionic polymer B having a charge opposite to the charge of the ionic group via the ionic group, a hydrogen-evolution photocatalyst has an ionic polymer A, and the solid state mediator and the hydrogen-evolution photocatalyst are joined to each other by ionic bonding between the ionic polymer B and the ionic polymer A.

In a case where the ionic group of the solid state mediator is an anionic group, the ionic polymer A is an anionic polymer and the ionic polymer B is a cationic polymer.

In a case where the ionic group of the solid state mediator is a cationic group, the ionic polymer A is a cationic polymer, and the ionic polymer B is an anionic polymer.

In the present invention, the term "joining" means a state in which the oxygen-evolution photocatalyst and the solid state mediator, the hydrogen-evolution photocatalyst and the solid state mediator, or the oxygen-evolution photocatalyst and the hydrogen-evolution photocatalyst are integrated by ionic bonding, hydrogen bonding, electrostatic attraction, van der Waals force, or the like to such an extent that they are not separated when a photocatalytic reaction is performed.

Here, in a case where at least one of the oxygen-evolution photocatalyst and the solid state mediator has an ionic group, a state in which the oxygen-evolution photocatalyst and the solid state mediator are integrated via an ionic group is also referred to as "(indirect) joining" of the oxygen-evolution photocatalyst and the solid state mediator. Similarly, in a case where any one of the hydrogen-evolution photocatalyst and the solid state mediator, and the oxygen-evolution photocatalyst and the hydrogen-evolution photocatalyst has an ionic group, a state in which they are integrated via the ionic group is also referred to as "joining" between the hydrogen-evolution photocatalyst and the solid state mediator and "joining" between the oxygen-evolution photocatalyst and the hydrogen-evolution photocatalyst, respectively.

In addition, a state of being integrated via the joining agent is also referred to as "joining" between the oxygen-evolution photocatalyst and the solid state mediator, "joining" between the hydrogen-evolution photocatalyst and the solid state mediator, and "joining" between the oxygen-evolution photocatalyst and the hydrogen-evolution photocatalyst, respectively.

In the present invention, the term "electrons collecting surface" means an exposed crystal facet on which excited electrons are most likely to gather in various structures of the oxygen-evolution photocatalyst.

(Hydrogen-evolution photocatalyst)

The hydrogen-evolution photocatalyst contains an organic semiconductor. The inclusion of the organic semiconductor is useful because a hydrogen-evolution photocatalyst having an excellent degree of freedom in molecular design can be obtained as compared with an inorganic semiconductor containing a metal oxide such as titanium oxide ($TiO_2$).

The hydrogen-evolution photocatalyst is not particularly limited as long as the hydrogen-evolution photocatalyst contains an organic semiconductor. In particular, the organic semiconductor is preferably a covalent organic framework (COF).

The COF is a crystalline organic polymer constituted by a covalent bond and having two-dimensional or three-dimensional periodicity. The molecular design (structure control) of the COF is easy by a combination of organic molecules as compared with a conventional hydrogen-evolution photocatalyst containing an inorganic semiconductor. Thus, the COF may have a structure derived from required performance.

For example, by adopting a long conjugated structure in the molecular structure of the COF, the energy gap (energy difference) between the HOMO energy and LUMO energy of the molecule can be reduced, thereby narrowing (reducing) the band gap. As a result, a hydrogen-evolution photocatalyst having a wide light absorption range can be obtained.

The two-dimensional COFs can have diversity in topology and shape of the pore of the two-dimensional COF by linking or binding the following symmetric units $C_2$, $C_3$, $C_4$, and $C_6$.

[Formula 1]

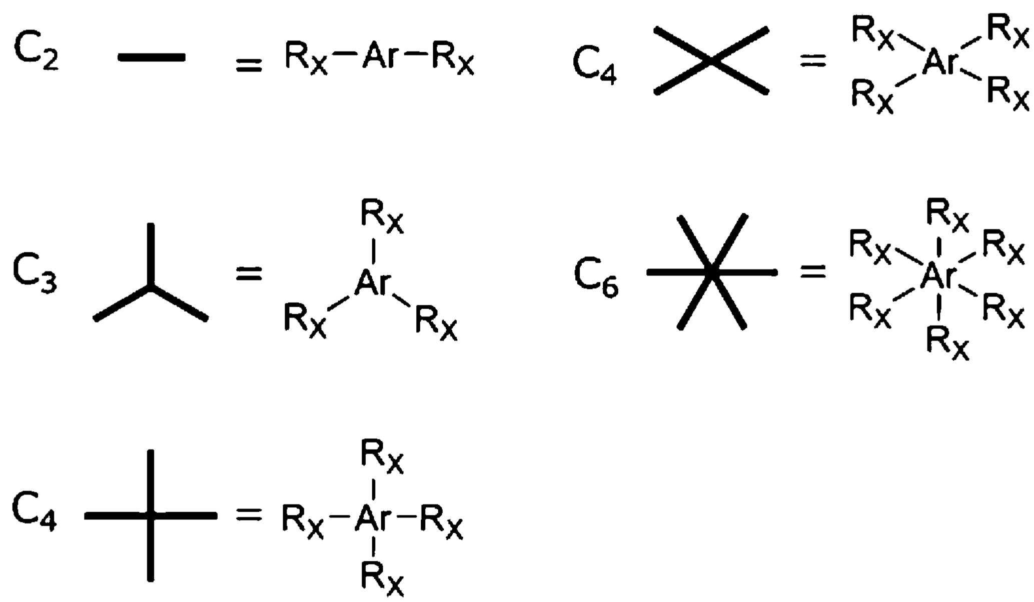

Here, Ar represents a bond, an element, or a skeleton of benzene, an aromatic compound, or the like (hereinafter, also simply referred to as a skeleton Ar). $R_x$ represents a substituent. Examples of the substituent $R_x$ include a boronic acid group, an amidoborane group, an amino group, a hydroxy group, a hydrazide group, an orthothioaniline group, a cyano group, a cyanomethyl group, a ketone group, a carboxylic anhydride group, a carboxylic acid halide group, an aldehyde group, and a halogen group. These substituents $R_x$ may include an aromatic compound. Examples thereof include an aromatic amino group and an aromatic aldehyde group.

Examples of the topology diagram constituting the two-dimensional COF include the following (1) a hexagonal topology, (2) a tetragonal topology, (3) a rhombic topology, and (4) a triangular topology.

[Formula 2]

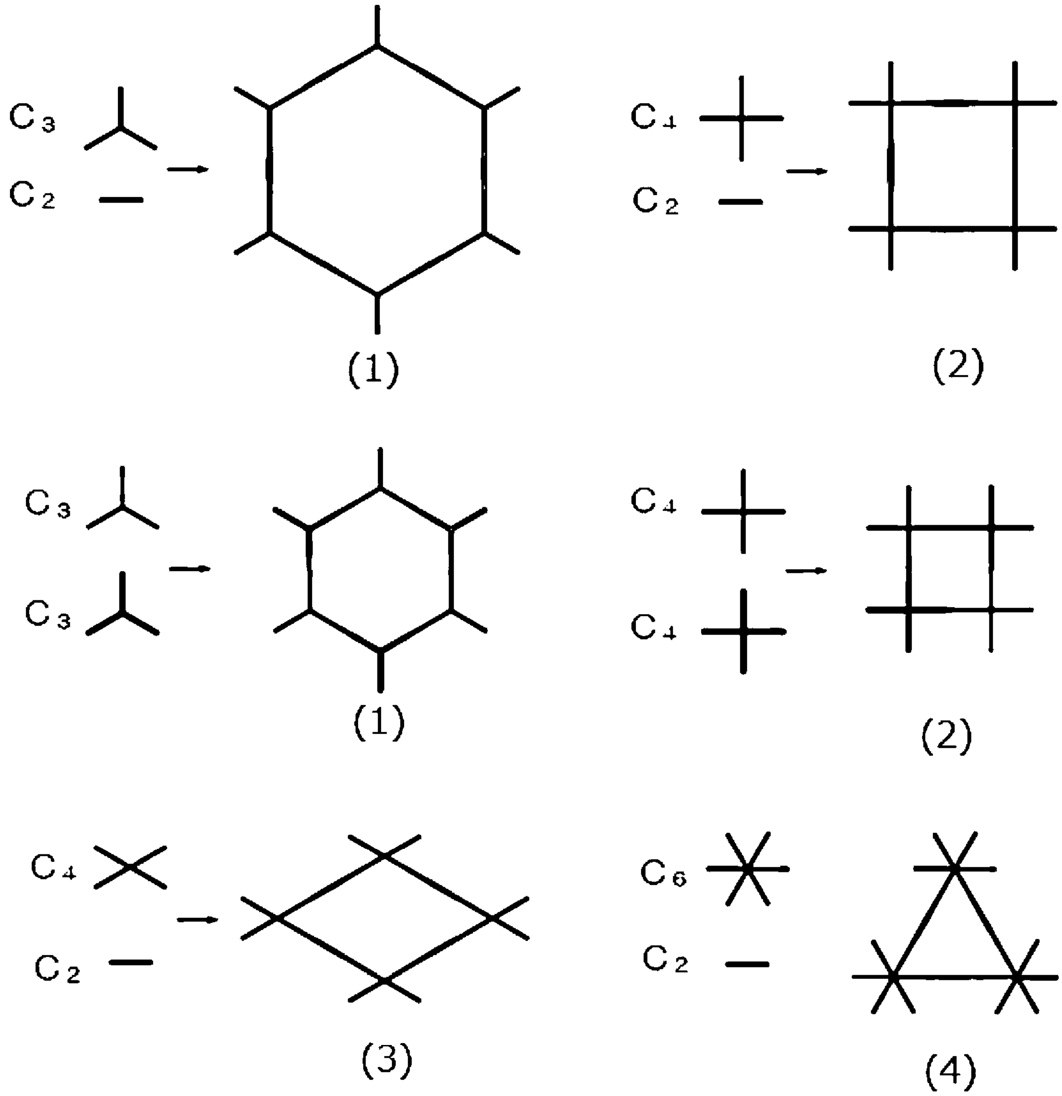


Among them, (1) the hexagonal topology is preferable from the viewpoint of improving crystallinity and photocatalytic activity because the conjugated system (conjugate length) in the COF can be extended in the in-plane (horizontal) direction of the COF and/or in the stacking (vertical) direction in a case where the COF forms a layer structure (see Fig. 1).

In the case of (1) the hexagonal COF, the hexagonal COF has hexagonal pores, and thus the size of the pore tends to be uniform. Since the size of the pores is uniform, it tends to be easy to control adsorption and desorption behaviors of a sacrificial reagent or water molecules as a reactant used for synthesis of the COF, and hydrogen molecules as a product generated when the COF functions as a hydrogen-evolution photocatalyst. In addition, the hydrogen-evolution photocatalyst obtained using the COF can achieve both a small band gap and a high photocatalytic activity.

The three-dimensional COFs are all linked via a covalent bond, and require a precursor compound having a three-dimensional branched structure. In addition, similarly to the two-dimensional COF, the three-dimensional COF may have diversity in the topology and the shape of the pore.

The three-dimensional COF can have diversity in the topology and shape of the pore of the three-dimensional COF by linking or binding the symmetric unit and a tetrahedral unit ("$T_d$" described below) or the like contributing to the three-dimensional network.

[Formula 3]

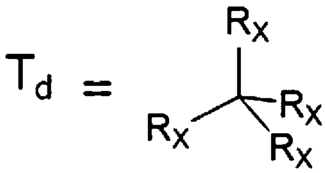


Examples of the topology diagram constituting the three-dimensional COF include the following (5) a dia type, (6) a dia type and a ctn type, (7) a bor type, a ctn type, and a srs type, (8) a pts type, and (9) a dia type and a pts type.

[Formula 4]

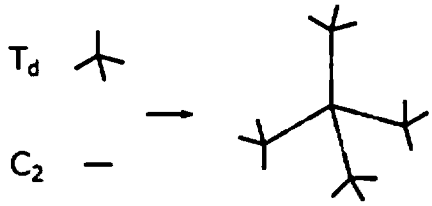


(5)

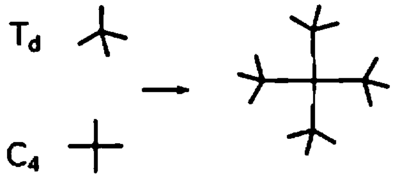


(8)

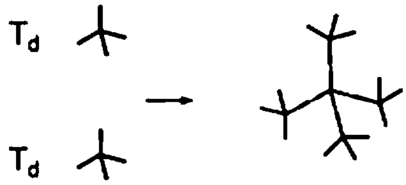


(6)

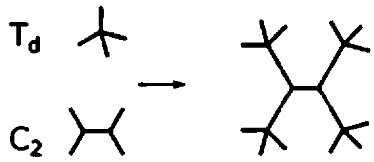


(9)

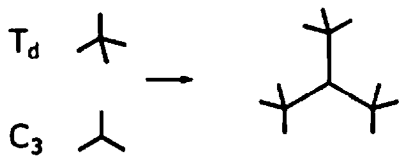


(7)

The topology diagram of the COF largely depends on the geometric shape (the symmetric unit) of the precursor compound that is a synthetic raw material of the COF. The geometric shape of the precursor compound also affects the physical properties of the COF.

As for the geometric shape of the precursor compound, for example, in a case where the molecular skeleton of the COF is planar and the COF forms a layer structure, the conjugated system (conjugate length) can be extended in the stacking (vertical) direction. As a result, a COF having a narrow (small) band gap and improved mobility of excited electrons and holes tends to be obtained, which is preferable.

Specific examples based on the topology diagram of the COF include COFs formed by a plurality of combinations of symmetric units as described below. One type of the topology diagram of these COFs may be used, or two or more types thereof may be used in combination.

(Symmetric unit (geometric shape of precursor compound))

Examples of the symmetric unit $C_2$ used for the synthesis of the COF include compounds in which the skeleton Ar is a single bond and the substituents $R_X$ are directly bonded to each other, and compounds having an aromatic skeleton as the skeleton Ar and having two substituents $R_X$ forming an angle of 180° with each other from the aromatic skeleton.

The compound having an aromatic skeleton is, for example, a compound having a substituent $R_X$ at the para position of the aromatic skeleton. Examples of the compound include aromatic compounds having, as the aromatic skeleton, a benzene skeleton, a biphenyl skeleton, an anthracene skeleton, a triazine skeleton, a porphyrin skeleton, or the like.

Specific examples of the aromatic compound include hydrazine, a p-phenylenediamine-containing compound, and a 4,4'-diaminobiphenyl-containing compound.

Examples of the symmetric unit $C_3$ used for the synthesis of the COF include compounds having an aromatic skeleton as the skeleton Ar, and three substituents $R_X$ forming an angle of 120° with each other from the aromatic skeleton.

The compound is, for example, a compound having substituents $R_X$ at the 1, 3,5-positions of the aromatic skeleton. Examples of the compound include aromatic compounds having, as the aromatic skeleton, a benzene skeleton, a triazine skeleton, a porphyrin skeleton, a naphthalene skeleton, a triphenylbenzene skeleton, a triphenyltriazine skeleton, a triphenylamine skeleton, a triphenylphosphine skeleton, or the like.

Specific examples of the aromatic compound include a 1,3,5-triformylbenzene-containing compound, a tris(4-formylphenyl)amine-containing compound, and a 2,4,6-tris(4-aminophenyl)triazine-containing compound.

Examples of the symmetric unit $C_4$ used for the synthesis of the COF include compounds having an aromatic skeleton as the skeleton Ar, and four substituents $R_X$ on a plane from the aromatic skeleton.

The compound is, for example, an aromatic compound having substituents $R_X$ at the 2, 3, 5, and 6 positions. Examples of the compound include aromatic compounds having a benzene skeleton, a biphenyl skeleton, an anthracene skeleton, a triazine skeleton, a porphyrin skeleton, or the like.

Specific examples of the aromatic compound include 5,10,15,20-tetrakis(4-aminophenyl)porphyrin, 5,10,15,20-tetrakis(4-hydroxyphenyl)porphyrin, and 2,3,9,10,16,17,23,24-octakis(amino)phthalocyanine.

Examples of the symmetric unit $C_6$ used for the synthesis of the COF include compounds having an aromatic skeleton as the skeleton Ar, and six substituents $R_X$ forming an angle of 60° with each other on a plane from the aromatic skeleton.

Specific examples of the compound include hexa(4-formylphenyl)benzene and hexa(4-formylphenyl)-peri-hexabenzocoronene.

Examples of the tetrahedral unit $T_d$ contributing to the three-dimensional network used for the synthesis of the COF include compounds having a central skeleton and four substituents $R_X$ forming an angle of 109.5° with each other from the central skeleton.

Specific examples of the compound include tetrakis(4-boronylphenyl)methane, tetrakis(4-aminophenyl) methane, and tetrakis(4-formylphenyl)methane.

Examples of the combination of the symmetric units include the combinations shown in Chemical Formula 2 above. Examples of the combination of the symmetric unit and the tetrahedral unit include the combinations shown in Chemical Formula 4 above.

In the COF, organic molecules having a symmetry shape such as a linear shape, an equilateral triangular shape, and a regular tetrahedral shape are polycondensed in a self-assembling manner to form a framework having periodicity.

The structure of the framework is a structure obtained by polycondensation of a single molecule or a structure obtained by polycondensation of two or more types of molecules. The molecular design (structure control) and physical properties such as electron conductivity can be controlled by the combination of molecules.

In addition, the framework preferably has a crystalline structure having two-dimensional periodicity from the viewpoint of suppressing charge recombination between electrons and holes and charge transfer (mobility).

In addition, in a case where the topology is a two-dimensional topology diagram, the conjugated system (conjugate length) can be extended in the in-plane (horizontal) direction of the COF and/or in the stacking (vertical) direction in a case where the COF forms a layer structure. Therefore, a COF having high crystallinity tends to be obtained, which is preferable.

In the synthesis of the COF, a COF having a desired structure and physical properties can be obtained from the viewpoint of the linkage type of the COF and/or the topology diagram.

Examples of the linkage type of the COF include (10) a boroxine linkage, (11) a boronic acid ester linkage, (12) a borazine linkage, (13) an imide linkage, (14) an amide linkage, (15) a dioxin linkage, (16) an imine linkage, (17) a hydrazone linkage, (18) an azine linkage, (19) an oxazole linkage, (20) a thiazole linkage, (21) a squaraine linkage, (22) a triazine linkage, (23) a phenazine linkage, (24) an amino linkage, and (25) an olefin linkage, which are represented by the following structural formulas.

In (16) the imine linkage, a keto-enamine structure may be formed.

Among these, the linkage type of the COF is preferably one or two or more of (16) the imine linkage and (24) the amino linkage, and more preferably (16) the imine linkage from the viewpoint of improving crystallinity and photocatalytic activity.

[Formula 5]

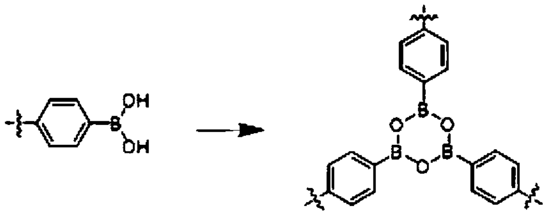

(10)

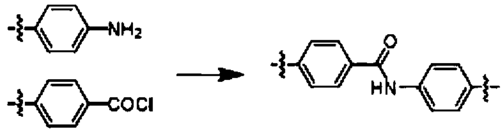

(14)

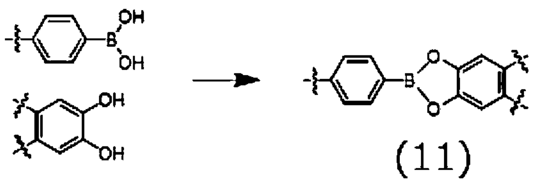

(11)

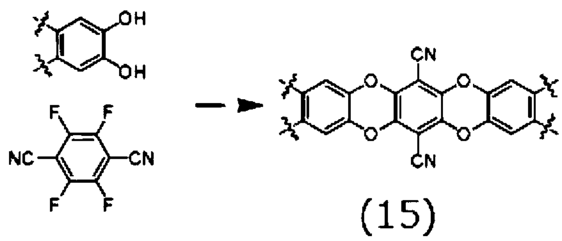

(15)

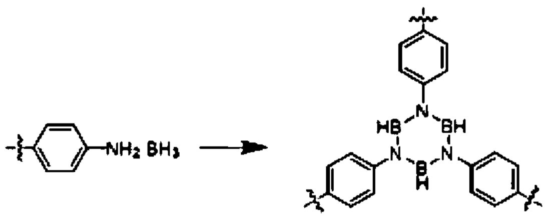

(12)

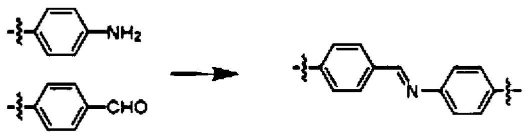

(16)

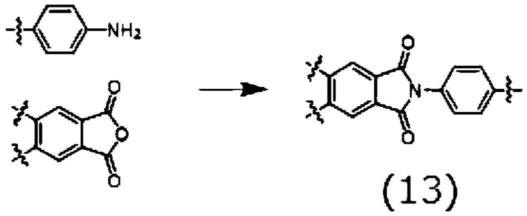

(13)

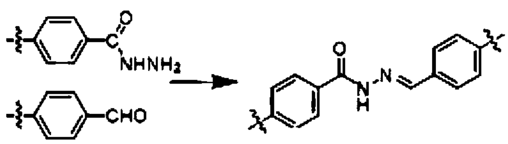

(17)

[Formula 6]

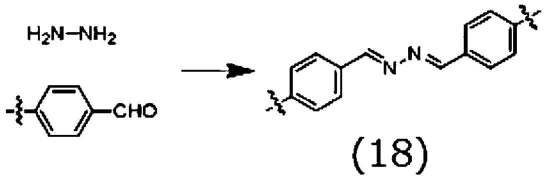

(18)

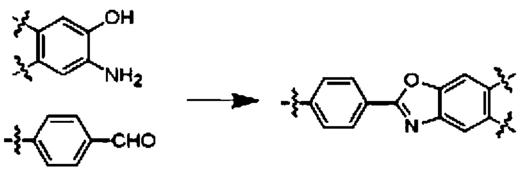

(19)

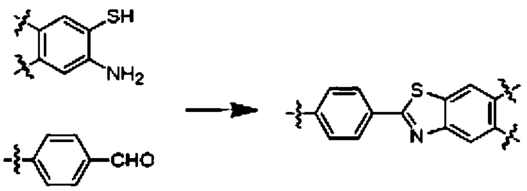

(20)

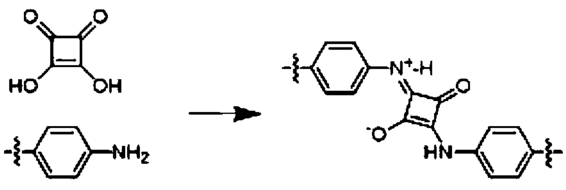

(21)

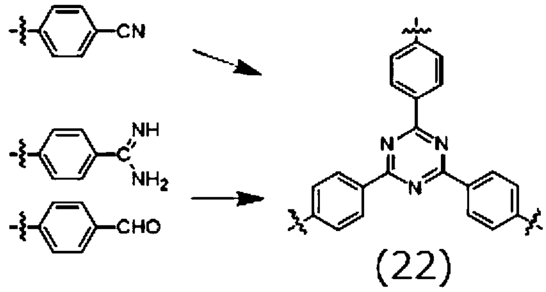

(22)

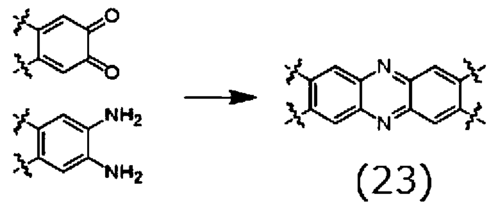

(23)

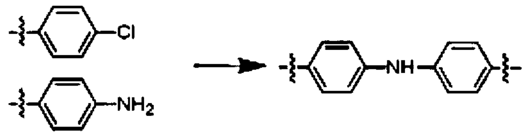

(24)

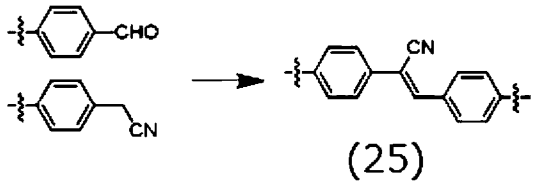

(25)

All the molecular skeletons of the linkage types shown in (10) to (25) have a benzene skeleton. In addition, the linkage type of the COF may have a skeleton of an aromatic compound such as a biphenyl skeleton, a triphenylamine skeleton, a triphenylphosphine skeleton, a naphthalene skeleton, an anthracene skeleton, or a triazine skeleton.

Specific examples based on the linkage type of the COF include COFs formed by the polycondensation reaction of the precursor compounds shown below. One type of the linkage type of these COFs may be used, or two or more types thereof may be used in combination.

Although the precursor compound can form the COF by one type of compound capable of polycondensation alone, it is preferable to form a COF having a long conjugated structure by a polycondensation reaction of two or more types of precursor compounds, from the viewpoint of obtaining a hydrogen-evolution photocatalyst having a small band gap and a wide light absorption range and from the viewpoint of enhancing the photocatalytic activity. By adopting a long conjugated structure in the molecular structure of the COF, the energy gap (energy difference) between the HOMO energy and LUMO energy of the molecule can be reduced, thereby narrowing (reducing) the band gap. As a result, a hydrogen-evolution photocatalyst having a wide light absorption range can be obtained.

(Precursor compound)

Examples of the precursor compound used for the synthesis of the COF include those capable of contributing to a polycondensation reaction. Specific examples thereof include a boronic acid-containing compound, an amidoborane-containing compound, a hydrazide-containing compound, an orthothioaniline-containing compound, a cyano group-containing compound, an acetonitrile-containing compound, an aromatic boronic acid, an aromatic amidoborane, an aromatic amine, an aromatic catechol, an aromatic hydrazide, an aromatic orthothioaniline, an aromatic nitrile, an aromatic acetonitrile, an aromatic quinone, and hydrazine. These compounds may be partially substituted with an amino group or a hydroxyl group.

Examples of the COF obtained by a polycondensation reaction of two or more different types of precursor

compounds include the following (a) to (n).

(a) A COF having (11) the boronic acid ester linkage among the above linkage types, which is obtained by dehydration condensation reaction of aromatic boronic acid and aromatic catechol.
(b) A COF having (13) the imide linkage among the above linkage types, which is obtained by dehydration condensation reaction of aromatic amine and aromatic carboxylic anhydride.
(c) A COF having (14) the amide linkage among the above linkage types, which is obtained by amidation reaction of aromatic amine and aromatic carboxylic acid halide.
(d) A COF having (15) the dioxin linkage among the above linkage types, which is obtained by oxidation reaction of aromatic catechol and aromatic halide.
(e) A COF having (16) the imine linkage among the above linkage types, which is obtained by condensation reaction of aromatic amine and aromatic aldehyde.
(f) A COF having (17) the hydrazone linkage among the above linkage types, which is obtained by condensation reaction of aromatic hydrazide and aromatic aldehyde.
(g) A COF having (18) the azine linkage among the above linkage types, which is obtained by condensation reaction of hydrazine and aromatic aldehyde.
(h) A COF having (19) the oxazole linkage among the above linkage types, which is obtained by dehydration condensation reaction of aromatic catechol and aromatic aldehyde.
(i) A COF having (20) the thiazole linkage among the above linkage types, which is obtained by desulfurization reaction of aromatic orthothioaniline and aromatic aldehyde.
(j) A COF having (21) the squaraine linkage among the above linkage types, which is obtained by dehydration condensation reaction of aromatic amine and oxocarbonic acid.
(k) A COF having (22) the triazine linkage among the above linkage types, which is obtained by dehydration condensation reaction of aromatic amidine and aromatic aldehyde.
(l) A COF having (23) the phenazine linkage among the above linkage types, which is obtained by condensation reaction of aromatic quinone and aromatic diamine.
(m) A COF having (24) the amino linkage among the above linkage types, which is obtained by substitution reaction between aromatic amine and aromatic halide.
(n) A COF having (25) the olefin linkage among the above linkage types, which is obtained by condensation reaction of aromatic acetonitrile and aromatic aldehyde.

Among them, from the viewpoint of extending the conjugate length of the COF and narrowing the band gap, the linkage type of the COF is preferably any one selected from (16) the imine linkage, (17) the hydrazone linkage, (19) the oxazole linkage, (20) the thiazole linkage, (21) the squaraine linkage, (22) the triazine linkage, and (24) the amino linkage.
The COF is formed of one type or a combination of two or more types of the precursor compounds. The precursor compound forms a pair (donor and acceptor) of a compound (donor) having an electron-donating group and a compound (acceptor) having an electron-withdrawing group. A COF obtained by a combination of these compounds can have high mobility of excited electrons and holes, and can exhibit improved photocatalytic activity.
Examples of the electron-donating group include a hydroxy group, an alkoxy group, a dialkylamino group, an alkyl group, an aryl group, and a halogen group.
Examples of the electron-withdrawing group include a cyano group, a nitro group, a ketone group, an amide group, an ester group, and a trifluoromethyl group.
As a method for synthesizing the COF, for example, a method for synthesizing an imine-type COF among the linkage types of the COF is exemplified below.

(Method for synthesizing imine-type COF)

The method for synthesizing the imine-type COF is not particularly limited, and examples thereof include a solvothermal method, a hydrothermal synthesis method, a reflux method, a microwave synthesis method, and a mechanochemical method. Among them, one selected from a solvothermal method and a reflux method is preferable from the viewpoint of enhancing crystallinity and photocatalytic activity.
In the method for synthesizing the imine-type COF, for example, the imine-type COF can be obtained by the following steps based on the solvothermal method.
Synthesis step: In a reaction vessel, the aromatic amine and the aromatic aldehyde (two polycondensable precursor compounds), a solvent, a catalyst, and the like are mixed to obtain a mixture (reaction solution). The obtained reaction solution is degassed, and then heated and held for a certain period of time, to thereby perform dehydration condensation of two types of the polycondensable precursor compounds. When the reaction is complete, the COF-containing liquid is taken out from the reaction vessel.

Washing step: The COF-containing liquid taken out is washed with a solvent, and then the COF-containing liquid after washing is filtered to recover a precipitate.

Drying step: The recovered precipitate is held at a temperature equal to or higher than the boiling point of the solvent used for washing, and dried.

Pulverization step: The dried material is pulverized using a pulverizer, if necessary, a pulverizing medium, and a solvent.

Synthesis confirmation method: In order to confirm that the pulverized product obtained by the above steps is a COF, a scanning electron microscope (SEM), powder X-ray diffraction (XRD), Fourier transform infrared spectroscopy (FT-IR), or an ultraviolet-visible spectrophotometer can be used for confirming the synthesis of the COF.

Examples of a method for confirming the crystallinity of the COF include XRD.

Examples of the method for confirming the degree of polymerization of the COF include FT-IR.

By enhancing the crystallinity of the COF, the mobility of excited electrons and holes is improved, and the photocatalytic activity of the hydrogen-evolution photocatalyst obtained by the COF is improved, which is useful.

In addition, by increasing the degree of polymerization of the COF, a highly ordered framework is formed to improve chemical stability and thermal stability, which is useful. Furthermore, as a result of forming a highly ordered framework by increasing the degree of polymerization of the COF, the crystallinity of the COF is also improved, and the photocatalytic activity of the resulting heterojunction photocatalyst is also improved, which is useful.

Examples of the catalyst used in the synthesis include acetic acid, lactic acid, malic acid, citric acid, sulfuric acid, nitric acid, hydrochloric acid, trifluoroacetic acid, sodium hydroxide, potassium hydroxide, calcium hydroxide, magnesium hydroxide, and ammonia. These may be used singly or in combination of two or more types thereof, or may be a salt formed from an acid and a base. Among them, acetic acid is preferable from the viewpoint of enhancing the degree of polymerization and

crystallinity of the COF.

The amount of the catalyst used in the synthesis is preferably 100 parts by mass or more, more preferably 200 parts by mass or more, and still more preferably 400 parts by mass or more, based on 100 parts by mass of the raw materials used, from the viewpoint of the degree of polymerization and crystallinity of the COF to be obtained. The amount of the catalyst used in the synthesis is preferably 1000 parts by mass or less, more preferably 800 parts by mass or less, and still more preferably 600 parts by mass or less, based on 100 parts by mass of the raw materials used, from the viewpoint of improving the degree of polymerization and crystallinity of the COF to be obtained.

Examples of the solvent used in the synthesis include mesitylene, 1,4-dioxane, dimethylacetamide, dimethylformamide, dimethylsulfoxide, N-methylpyrrolidone, γ-butyrolactone, p-toluenesulfonic acid, toluene, piperidine, pyridine, tetrahydrofuran, acetone, and water. These may be used singly or in combination of two or more types thereof. Among them, one or more selected from mesitylene and 1,4-dioxane are preferable, and a mixed solvent of mesitylene and 1,4-dioxane is more preferable from the viewpoint of enhancing the degree of polymerization and crystallinity of the COF.

The amount of the solvent used in the synthesis is preferably 300 parts by mass or more, more preferably 500 parts by mass or more, still more preferably 1000 parts by mass or more, and still even more preferably 1200 parts by mass or more, based on 100 parts by mass of the raw materials used, from the viewpoint of enhancing the degree of polymerization and crystallinity of the COF. The amount of the solvent used in the synthesis is preferably 50000 parts by mass or less, more preferably 10000 parts by mass or less, still more preferably 5000 parts by mass or less, and still even more preferably 3000 parts by mass or less, based on 100 parts by mass of the raw materials used, from the viewpoint of enhancing the degree of polymerization and crystallinity of the COF.

The reaction temperature is preferably 40°C or higher, more preferably 80°C or higher, and still more preferably 100°C or higher from the viewpoint of increasing the degree of polymerization of the COF. The reaction temperature is preferably 300°C or lower, more preferably 200°C or lower, and still more preferably 150°C or lower from the viewpoint of enhancing the photocatalytic activity of the COF.

The reaction time is preferably 3 hours or more, more preferably 24 hours or more, still more preferably 72 hours or more from the viewpoint of increasing the degree of polymerization of the COF. The reaction time is preferably 1000 hours or less, more preferably 300 hours or less, and still more preferably 200 hours or less from the viewpoint of enhancing the productivity of the COF.

Examples of the solvent used in the washing step include mesitylene, 1,4-dioxane, dimethylacetamide, dimethylformamide, dimethylsulfoxide, N-methylpyrrolidone, γ-butyrolactone, p-toluenesulfonic acid, toluene, piperidine, pyridine, tetrahydrofuran, acetone, and water. These may be used singly or in combination of two or more types thereof. Among them, one or more selected from dimethylformamide, tetrahydrofuran, and acetone are preferable from the viewpoint of enhancing the photocatalytic activity of the COF.

The COF obtained by the synthesis method functions as a hydrogen-evolution photocatalyst containing an organic semiconductor. Such a COF is excellent in the degree of freedom in molecular design, catalytic activity, and the like

of the hydrogen-evolution photocatalyst and a heterojunction photocatalyst containing the hydrogen-evolution photocatalyst.

The heterojunction photocatalyst of the present invention is a heterojunction photocatalyst having a solid state mediator between a hydrogen-evolution photocatalyst containing an organic semiconductor and an oxygen-evolution photocatalyst. Therefore, among excited electrons and holes generated by light irradiation in the organic semiconductor, the holes are consumed by being recombined with excited electrons generated on the oxygen-evolution photocatalyst side via the solid state mediator. Meanwhile, the excited electrons generated in the organic semiconductor can contribute to generation of hydrogen in the hydrogen-evolution photocatalyst, thus making it possible to efficiently promote hydrogen generation.

In addition, in the case of singly using a hydrogen-evolution photocatalyst containing an organic semiconductor, since the heterojunction photocatalyst does not have an oxygen-evolution photocatalyst via a solid state mediator, the use of a sacrificial reagent is required for hydrogen generation. However, since the heterojunction photocatalyst of the present invention does not require a sacrificial reagent, only inexhaustively present water is used as a raw material, which is excellent in economic efficiency.

In the heterojunction photocatalyst of the present invention, a sacrificial reagent may be used.

(Oxygen-evolution photocatalyst)

The oxygen-evolution photocatalyst is not particularly limited, and examples thereof include metal oxides such as $BiVO_4$, $TiO_2$, $WO_3$, $SrTiO_3$, $Ag_3PO_4$, $SnNb_2O_6$, $Bi_2WO_6$, $Fe_2TiO_5$, $Fe_2O_3$, $Bi_2MoO_6$, and compounds in which these metal oxides are doped with one or more metals such as Cr, Ni, Sb, Nb, Th, Mo, and W; metal nitrides such as $Ta_3N_5$ and $Ge_3N_4$; metal oxynitrides such as $LaTiO_2N$, $BaTaO_2N$, $BaNbO_2N$, and TaON; and the like. These may be used singly or in combination of two or more types thereof.

From the viewpoint of enhancing the catalytic activity, the oxygen-evolution photocatalyst is preferably one or two or more selected from oxides containing an element selected from elements belonging to Group 14 and elements belonging to Group 15 of the periodic table, more preferably one or two or more selected from oxides containing an element selected from Bi, Pb, Sb, and Sn, still more preferably one or two or more selected from oxides containing Bi, still even more preferably contains $BiVO_4$, and is yet still even more preferably $BiVO_4$.

The electrons collecting surface of the oxygen-evolution photocatalyst depends on the composition of the material and the crystal system. Examples of the method for specifying the electrons collecting surface include a method in which a solution of a precursor of metal such as Pt, Au, or Ag is brought into contact with semiconductor crystal particles as a material of the oxygen-evolution photocatalyst to cause the semiconductor crystal particles to support metal particles precipitated by a photoprecipitation method, and a crystal facet on which the metal particles are precipitated is confirmed with SEM (scanning electron microscope) or TEM (transmission electron microscope).

The identification of the crystal facet on which the metal particles are precipitated can be performed, for example, by specifying a crystal facet spacing attributed from lattice fringes observed by TEM.

The electrons collecting surface of the oxygen-evolution photocatalyst is, for example, the {010} plane or the {040} plane in the case of $BiVO_4$ (monoclinic scheelite crystal), the {110} plane in the case of $TiO_2$ (rutile crystal), the {101} plane in the case of $TiO_2$ (anatase crystal), the {002} plane in the case of $WO_3$ (monoclinic crystal), the {110} plane in the case of $SrTiO_3$ (perovskite crystal), and the {110} plane in the case of $Ag_3PO_4$ (cubic crystal).

The hydrogen-evolution photocatalyst and the oxygen-evolution photocatalyst preferably have a cocatalyst on a surface thereof. In addition, the hydrogen-evolution photocatalyst contains an organic semiconductor, the organic semiconductor is preferably a covalent organic framework, and the covalent organic framework more preferably contains the cocatalyst. By containing the cocatalyst, reduction and oxidation reactions of water or the like are promoted, and the production efficiency of hydrogen and oxygen is improved.

Examples of the cocatalyst of the hydrogen-evolution photocatalyst include transition metals such as Pt, Pd, Ru, Ni, Au, Fe, Ir, and Rh; metal oxides such as NiO, $RuO_2$, $IrO_2$, and $Rh_2O_3$; metal sulfides such as NiS and $MoS_2$; Cr-Rh composite oxide; and the like. These may be used singly or in combination of two or more types thereof. Among them, from the viewpoint of hydrogen evolution efficiency, the cocatalyst is preferably one or two or more selected from transition metals, more preferably one or two or more selected from metals belonging to the Group 10 of the periodic table, and still more preferably Pt. Among them, from the viewpoint of hydrogen generation efficiency, the cocatalyst of the hydrogen-evolution photocatalyst is preferably one or two or more selected from transition metals, more preferably one or two or more selected from metals belonging to Group 8 to 10 of the periodic table, still more preferably one or two or more selected from metals belonging to the iron group and the platinum group, still even more preferably one or two or more selected from metals belonging to the platinum group, and still even more preferably Ru.

Examples of the metal belonging to the iron group include Fe, Co, and Ni, and examples of the metal belonging to the platinum group include Pt, Pd, Ru, Rh, Os, and Ir.

Examples of the cocatalyst of the oxygen-evolution photocatalyst include transition metals such as Mn, Fe, Co, Ir,

Ru, Rh, Ni, Sb, Nb, Th, and Cr; oxides and hydroxides of these transition metals; and the like. These may be used singly or in combination of two or more types thereof. Among them, one or two or more selected from transition metals oxides are preferable from the viewpoint of oxygen evolution efficiency.

Examples of the method for supporting the cocatalyst on the surface of the hydrogen-evolution photocatalyst or the oxygen-evolution photocatalyst include a photoelectrodeposition method, an impregnation method, an adsorption method, a precipitation method, a hydrogen reduction method, an electroless plating method, and the like.

The impregnation method and the adsorption method are methods in which the photocatalyst is dispersed in a solution in which a cocatalyst precursor is dissolved to adsorb the cocatalyst precursor on the surface of the photocatalyst. Examples of the cocatalyst precursor include chlorides, nitrates, ammine salts of the transition metals, and the like.

Preferably, the cocatalyst precursor is supported on the surface of the photocatalyst and then reduced. The activity of the catalyst is increased by reducing the cocatalyst precursor to a metal state. Examples of the method for reducing the cocatalyst precursor include a photoreduction method, a chemical reduction method, and the like.

The photoreduction method is a method in which a cocatalyst precursor adsorbed to a photocatalyst is reduced by excited electrons generated in the photocatalyst by irradiating the photocatalyst with ultraviolet light or visible light.

The chemical reduction method is a method in which the cocatalyst precursor is reduced under a hydrogen gas stream at about 400°C or less, preferably 300°C or less. The cocatalyst supported on the surface of the photocatalyst is particulate, and the amount of the cocatalyst to be supported may be appropriately adjusted.

(Solid state mediator)

The solid state mediator is a material capable of storing excited electrons that are generated in the oxygen-evolution photocatalyst and do not contribute to reduction of water or the like and holes that are generated in the hydrogen-evolution photocatalyst and do not contribute to oxidation of water or the like, and capable of causing a charge recombination reaction between the excited electrons and the holes.

Examples of the solid state mediator include transition metals such as gold, silver, copper, nickel, titanium, manganese, rhodium, palladium, ruthenium, and iridium; transition metal compounds such as oxides, nitrides, and carbides of these transition metals; doped metal oxides such as tin-doped indium oxide (ITO), metal (B, Al, Ga)-doped zinc oxide, fluorine-doped tin oxide, and antimony-doped tin oxide; and the like. These may be used singly or in combination of two or more types thereof. Among these, from the viewpoint of enhancing the catalytic activity, the solid state mediator includes preferably one or two or more selected from transition metals or compounds thereof, more preferably one or two or more selected from transition metals including elements belonging to the Group 11 of the periodic table or compounds thereof, still more preferably one or two or more selected from gold or silver, still more preferably gold.

Note that the hydrogen-evolution photocatalyst can be joined to the solid state mediator and the oxygen-evolution photocatalyst, and preferably, the hydrogen-evolution photocatalyst is selectively joined to the solid state mediator (joined to the solid state mediator more than the oxygen-evolution photocatalyst) from the viewpoint of obtaining high catalytic activity.

<Method for producing heterojunction photocatalyst>

The method for producing a heterojunction photocatalyst of the present invention is, for example, a method for producing a heterojunction photocatalyst having a solid state mediator between a hydrogen-evolution photocatalyst containing an organic semiconductor and an oxygen-evolution photocatalyst, in which the solid state mediator is joined to the surface of the oxygen-evolution photocatalyst and then the hydrogen-evolution photocatalyst is joined to the surface of the solid state mediator, the method including the following step 1.

Step 1: a step of joining the solid state mediator onto the oxygen-evolution photocatalyst by at least one method selected from the group consisting of a photoelectrodeposition method, an impregnation supporting method, and a precipitation method, in each of which an organic carboxylic acid compound and a solid state mediator or a precursor of the solid state mediator are used

Specifically, the following methods for producing (I) and (II), which include the steps 2, 3, and 4 or the steps 2', 3', and 4', are preferable.

In the method for producing a heterojunction photocatalyst of the present invention, it is preferable to join the hydrogen-evolution photocatalyst and the solid state mediator and/or join the oxygen-evolution photocatalyst and the solid state mediator using an ionic polymer as a joining agent.

When an ionic polymer is used as the joining agent, the hydrogen-evolution photocatalyst and the solid state mediator, and/or the oxygen-evolution photocatalyst and the solid state mediator can be joined via an ionic polymer as the joining agent by ionic bonding, and an integrated "junction" photocatalyst can be formed, which is preferable.

In other words, the method for producing a heterojunction photocatalyst of the present invention is preferably, for example, a method (I) for producing a heterojunction photocatalyst, which includes the following steps 1 to 4. Provided that

steps 2 and 3 are performed in random order. Step 3 may be performed after step 2, step 2 may be performed after step 3, or steps 2 and 3 may be performed at the same time.

Step 1: a step of joining the solid state mediator onto the oxygen-evolution photocatalyst by at least one method selected from the group consisting of a photoelectrodeposition method, an impregnation supporting method, and a precipitation method, in each of which an organic carboxylic acid compound and a solid state mediator or a precursor of the solid state mediator are used

Step 2: a step of introducing an ionic group into the solid state mediator (hereinafter, "embodiment 1") to obtain an oxygen-evolution photocatalyst to which a solid state mediator having the ionic group is joined

Step 3: a step of introducing an ionic polymer having a charge opposite to a charge of the ionic group into the hydrogen-evolution photocatalyst

Step 4: a step of mixing the oxygen-evolution photocatalyst obtained in step 2 to which a solid state mediator having the ionic group is joined with the hydrogen-evolution photocatalyst obtained in step 3 into which the ionic polymer is introduced

The method for producing a heterojunction photocatalyst of the present invention is preferably, for example, a method (II) for producing a heterojunction photocatalyst, which includes the following steps 1, 2', 3', and 4'. Provided that steps 2' and 3' are performed in random order. Step 3' may be performed after step 2', step 2' may be performed after step 3', or steps 2' and 3' may be performed at the same time.

Step 1: a step of joining the solid state mediator onto the oxygen-evolution photocatalyst by at least one method selected from the group consisting of a photoelectrodeposition method, an impregnation supporting method, and a precipitation method, in each of which an organic carboxylic acid compound and a solid state mediator or a precursor of the solid state mediator are used

Step 2': a step of introducing an ionic group into the solid state mediator and further reacting the ionic group with an ionic polymer having a charge opposite to a charge of the ionic group (hereinafter, "embodiment 2") to obtain an oxygen-evolution photocatalyst to which a solid state mediator having the ionic polymer is joined

Step 3': a step of introducing an ionic polymer having a charge opposite to the charge of the ionic polymer into the hydrogen-evolution photocatalyst

Step 4': a step of mixing the oxygen-evolution photocatalyst obtained in step 2' to which a solid state mediator having the ionic polymer is joined with the hydrogen-evolution photocatalyst obtained in step 3' into which the ionic polymer is introduced

<Description of each step>

Hereinafter, each step in the method for producing a heterojunction photocatalyst of the present invention will be described.

<Step 1>

The method for joining (supporting) the solid state mediator onto the surface of the oxygen-evolution photocatalyst is not particularly limited, but for example, it is preferable to use at least one method selected from the group consisting of a photoelectrodeposition method, an impregnation supporting method, and a precipitation method.

The photoelectrodeposition method is a method in which a dispersion containing a photocatalyst, a metal salt (precursor of solid state mediator), and an organic carboxylic acid compound is irradiated with light to reduce the metal salt as well as precipitate metal particles or metal compound particles (solid state mediator) and join (support) the particles to (on) the surface of the photocatalyst. Examples of the precursor of the solid state mediator include ionic salts of mediators such as silver nitrate and gold halides (tetrachloroauric acid).

The impregnation supporting method is a method in which a photocatalyst is mixed with a solution or dispersion in which a metal salt (precursor of solid state mediator) and an organic carboxylic acid compound are dissolved or dispersed, then the solvent is removed by solid-liquid separation through filtration, decantation, or centrifugation, heating, or distillation of the solvent under reduced pressure, or the like to support the metal salt on the surface of the photocatalyst, and then the metal salt is fired or reduced to join (support) metal particles or metal compound particles (solid state mediator) to (on) the surface of the photocatalyst.

The precipitation method is a method in which a photocatalyst is mixed with metal particles or metal compound particles (solid state mediator) obtained by reducing a metal salt (precursor of solid state mediator) in a solution containing an organic carboxylic acid compound to join (support) the metal particles or metal compound particles (solid state mediator) to (on) the surface of the photocatalyst.

The photoelectrodeposition method is preferable from the viewpoint of increasing the coverage of the solid state mediator to the electrons collecting surface of the oxygen-evolution photocatalyst.

The photoelectrodeposition method is a method in which a dispersion containing an oxygen-evolution photocatalyst, an organic carboxylic acid compound, and a solid state mediator or a precursor of the solid state mediator is irradiated with light to join (support) the solid state mediator to (on) the oxygen-evolution photocatalyst, and at this time, it is considered that excited electrons and holes are generated in the photocatalyst by the light irradiation, and the electrons cause the reduction and precipitation of the solid state mediator and the holes cause the oxidation of water and the like.

As the solvent used in the dispersion, water is preferable, but lower alcohols having 1 or more and 1 or less carbon atoms such as methanol, ethanol, and 2-propanol can also be used as an auxiliary agent (sacrificial reagent) in order to promote the consumption of holes.

The organic carboxylic acid compound is estimated to contribute to the reduction of the metal salt (precursor of solid state mediator), and is considered to also act as an auxiliary agent for joining (supporting) the solid state mediator onto the oxygen-evolution photocatalyst.

The use of the organic carboxylic acid compound improves the coverage of the solid state mediator to the electrons collecting surface of the oxygen-evolution photocatalyst, and for example, $BiVO_4$ (monoclinic scheelite crystal) improves the selectivity to the {010} plane, which is the electrons collecting surface, can join the solid state mediator onto the oxygen-evolution photocatalyst in a dense state, and can improve the catalytic activity.

From the viewpoint of joining the solid state mediator onto the oxygen-evolution photocatalyst in a dense state, the organic carboxylic acid compound includes preferably at least one selected from the group consisting of an ether carboxylate, a fatty acid, a hydroxymonocarboxylic acid, and a polycarboxylic acid, more preferably an ether carboxylate, and specifically the following organic carboxylic acid compounds 1) to 4).

1) Ether carboxylate

Examples of the ether carboxylate include those represented by the following Formula (1).

$$R^1\text{-O-(EO)}_n\text{-CH}_2\text{COOH} \qquad (1)$$

In Formula (1), from the viewpoint of water solubility and function as an auxiliary agent, $R^1$ is preferably a linear or branched alkyl group or alkenyl group having 4 to 22 carbon atoms, more preferably a linear or branched alkyl group or alkenyl group having 8 to 18 carbon atoms, still more preferably a linear or branched alkyl group having 8 to 18 carbon atoms (alkyl ether carboxylate). From the viewpoint of water solubility and function as an auxiliary agent, the average number n of added moles of EO (ethyleneoxy group) is preferably 1 to 25, more preferably 2 to 12, still more preferably 3 to 8.

Examples of the ether carboxylate include polyoxyethylene (4.5) lauryl ether acetic acid, and the ether carboxylate may be a potassium salt, sodium salt, or ammonium salt thereof.

2) Fatty acid

Examples of the fatty acid include those represented by the following Formula (2).

$$R^2\text{-COOH} \qquad (2)$$

In Formula (2), from the viewpoint of water solubility and function as an auxiliary agent, $R^2$ is preferably a linear or branched alkyl group or alkenyl group having 4 to 22 carbon atoms, more preferably a linear or branched alkyl group or alkenyl group having 8 to 22 carbon atoms, still more preferably a linear or branched alkyl group or alkenyl group having 12 to 18 carbon atoms.

Examples of the fatty acid include oleic acid, and the fatty acid may be a potassium salt, sodium salt, or ammonium salt thereof.

3) Hydroxymonocarboxylic acid

From the viewpoint of water solubility and function as an auxiliary agent, the hydroxymonocarboxylic acid has preferably a hydrocarbon group having 2 or more and 12 or less carbon atoms, more preferably a hydrocarbon group having 3 or more and 8 or less carbon atoms.

Examples of the hydroxymonocarboxylic acid include glycolic acid, lactic acid, glyceric acid, gluconic acid, or pantothenic acid.

4) Polycarboxylic acid

From the viewpoint of water solubility and function as an auxiliary agent, the polycarboxylic acid has preferably a

hydrocarbon group having 2 or more and 12 or less carbon atoms, more preferably a hydrocarbon group having 3 or more and 8 or less carbon atoms.

The polycarboxylic acid is preferably a dicarboxylic acid, examples of the dicarboxylic acid include malic acid, tartaric acid, oxalic acid, malonic acid, maleic acid, succinic acid, or glutaric acid, and examples of tricarboxylic acids include citric acid.

The organic carboxylic acid compounds of 1) to 4) above may be used singly or in mixture of two or more kinds thereof.

In the step 1, in a dispersion containing a photocatalyst, a metal salt (precursor of the solid state mediator), and an organic carboxylic acid compound, the amount of the organic carboxylic acid compound used is preferably 100 parts by mass or more, more preferably 500 parts by mass or more, and still more preferably 1000 parts by mass or more, based on 100 parts by mass of the solid state mediator or a precursor (metal salt) thereof, from the viewpoint of increasing the coverage of the solid state mediator on the oxygen-evolution photocatalyst and improving the catalytic activity. From the same viewpoint, the amount of the organic carboxylic acid compound used is preferably 100000 parts by mass or less, more preferably 50000 parts by mass or less, still more preferably 20000 parts by mass or less, preferably 100 parts by mass or more and 100000 parts by mass or less, more preferably 500 parts by mass or more and 50000 parts by mass or less, and still more preferably 1000 parts by mass or more and 20000 parts by mass or less.

In the step 1, preferably in the dispersion, the solid state mediator or a precursor (metal salt) thereof is contained (mixed) by preferably 0.1 part by mass or more, more preferably 1 part by mass or more, still more preferably 5 parts by mass or more from the viewpoint of increasing the coverage of the solid state mediator on the oxygen-evolution photocatalyst and improving the catalytic activity, preferably 1000 parts by mass or less, more preferably 500 parts by mass or less, still more preferably 100 parts by mass or less from the same viewpoint, and preferably 0.1 part by mass or more and 1000 parts by mass or less, more preferably 1 part by mass or more and 500 parts by mass or less, still more preferably 5 parts by mass or more and 100 parts by mass or less with respect to 100 parts by mass of the oxygen-evolution photocatalyst.

The light to be emitted may be either sunlight or artificial light (fluorescent lamp, UV lamp, LED, mercury lamp, xenon lamp, metal halide lamp, sodium lamp, halogen lamp, and the like).

The wavelength of the light is preferably 180 to 1000 nm, more preferably 300 to 800 nm from the viewpoint of increasing the coverage of the solid state mediator on the oxygen-evolution photocatalyst.

The irradiation light intensity is preferably 1 $mW/cm^2$ or more, more preferably 5 $mW/cm^2$ or more, and still more preferably 20 $mW/cm^2$ or more from the viewpoint of increasing the coverage of the solid state mediator on the electrons collecting surface of the oxygen-evolution photocatalyst. From the same viewpoint, the irradiation light intensity is preferably 1000 $mW/cm^2$ or less, more preferably 500 $mW/cm^2$ or less, and still more preferably 200 $mW/cm^2$ or less.

<Step 2>

In order to introduce an ionic group into the solid state mediator (embodiment 1), a compound containing an ionic group and a group exhibiting affinity for the solid state mediator may be used. Specifically, in a case where the solid state mediator includes gold (atoms), silver, or platinum, from the viewpoint of improving affinity for the metal, the compound is preferably one or two or more selected from a thiol compound having an ionic group and a selenium compound having an ionic group, and more preferably a thiol compound having an ionic group.

The thiol compound having an ionic group has at least one ionic group (ionic substituent).

Among the ionic groups, examples of the anionic group include a sulfonic acid group, a phosphonic acid group, a phosphoric acid group, and a carboxy group.

Among the ionic groups, examples of the cationic group include an ammonium group.

In particular, among the ionic groups, a thiol compound having an ammonium group or a carboxy group is preferable from the viewpoint of enhancing the catalytic activity.

From the same viewpoint, the ionic group is more preferably an anionic group, still more preferably a carboxylate anion (carboxy group).

The thiol compound having an ionic group has an alkylene group having preferably one or more carbon atoms, more preferably two or more carbon atoms from the viewpoint of enhancing the catalytic activity, and has an alkylene group having preferably 18 or less carbon atoms, more preferably 14 or less carbon atoms, still more preferably 8 or less carbon atoms from the same viewpoint.

The thiol compound having an ionic group preferably has two or less thiol groups, more preferably one thiol group from the viewpoint of enhancing the catalytic activity.

In a case where the thiol compound having an ionic group has an acidic group, the thiol compound may be an acid, a salt, or a mixture thereof.

As the thiol compound having an ionic group, thiomalic acid, 3-mercaptopropionic acid, thioglycolic acid, (11-mercaptoundecyl)trimethylammonium and the like are preferably used.

In the step 2, with respect to 100 parts by mass of the oxygen-evolution photocatalyst to which the solid state mediator is joined (supported), the thiol compound having an ionic group is contained (mixed) by preferably 0.1 part by mass or more, more preferably 1 part by mass or more from the viewpoint of enhancing the catalytic activity and preferably 100 parts by mass or less, more preferably 50 parts by mass or less from the same viewpoint, and is reacted by preferably 0.1 part by mass or more and 100 parts by mass or less, more preferably 1 part by mass or more and 50 parts by mass or less.

<Step 2'>

Similarly to the aspect 1, by introducing an ionic group into the solid state mediator and further reacting (ionically bonding) ("aspect 2") the ionic group with an ionic polymer having a charge opposite to the charge of the ionic group, it is possible to obtain an oxygen-evolution photocatalyst to which a solid state mediator into which an ionic group derived from the ionic polymer is introduced is joined.

Examples of the method for introducing an ionic group into the solid state mediator and further reacting (ionically bonding) the ionic group with an ionic polymer having a charge opposite to the charge of the ionic group include a method (i) in which an anionic group is introduced into the solid state mediator by mixing and reacting an oxygen-evolution photocatalyst to which a solid state mediator is joined (supported) with a thiol compound having an anionic group and then this is mixed and reacted (ionically bonded) with a polymer (hereinafter, also simply referred to as "cationic polymer") having a cationic group having a charge opposite to that of the anionic group.

Other methods include a method (ii) in which a cationic group is introduced into the solid state mediator by reacting an oxygen-evolution photocatalyst to which a solid state mediator is joined (supported) with a thiol compound having a cationic group and then this is mixed and reacted (ionically bonded) with a polymer (hereinafter, also simply referred to as "anionic polymer") having an anionic group having a charge opposite to that of the cationic group.

By these methods, a structure is formed in which the solid state mediator has an ionic group and an ionic polymer and the ionic group is ionically bonded to the ionic polymer.

The ionic polymer refers to a cationic polymer or anionic polymer, and as described later, the ionic polymer A and the ionic polymer B are used for convenience to distinguish the ionicity of ionic polymers. In other words, in a case where the ionic polymer A is a cationic polymer, it means that the ionic polymer B is an anionic polymer, and in a case where the ionic polymer A is an anionic polymer, it means that the ionic polymer B is a cationic polymer.

From the viewpoint of enhancing the catalytic activity, examples of the cationic polymer include a polymer having a quaternary ammonium group, specifically include preferably a polymer having a quaternary ammonium group, more preferably one or more selected from a cationized polysaccharide, a polymer or copolymer of diallyl quaternary ammonium salt, a polymer or copolymer of (meth)acryloyloxyethyl quaternary ammonium salt, a polymer or copolymer of (meth) acrylamidopropyl quaternary ammonium salt, or a polymer of dimethylamine epichlorohydrin, still more preferably (a) cationized cellulose, (b) cationized guar gum, (c) at least one selected from the group consisting of diallyl quaternary ammonium salt polymer and diallyl quaternary ammonium salt/acrylamide copolymer, or (d) (meth)acryloyloxyethyl quaternary ammonium salt polymer and (meth)acryloyloxyethyl quaternary ammonium salt/acrylamide copolymer, and (e) dimethylamine epichlorohydrin polymer, and (c) is particularly preferable. Quaternary ammonium groups also include protonated tertiary amines.

(a) Cationized cellulose:

The cation substitution degree of the cationized cellulose is 0.01 to 1, that is, the average value per anhydroglucose unit is preferably 0.01 to 1, more preferably 0.02 to 0.5 from the viewpoint of enhancing the catalytic activity. The weight average molecular weight of the cationized cellulose is preferably about 100,000 to 8,000,000 from the viewpoint of enhancing the catalytic activity.

Examples of commercially available products of (a) include the product names "Poise C-80H" (manufactured by Kao Corporation) and "Polymer JR-400" (manufactured by The Dow Chemical Company).

(b) Cationized guar gum:

The cationic substitution degree of the cationized guar gum is preferably 0.01 to 1, and more preferably 0.02 to 0.5 cationic groups are introduced into the sugar unit from the viewpoint of enhancing the catalytic activity.

Examples of commercially available products of (b) include "Jaguar C-13C" (manufactured by Rhodia Inc.).

(c) Diallyl quaternary ammonium salt polymer and diallyl quaternary ammonium salt/acrylamide copolymer:

The weight average molecular weight (Mw) of the diallyl quaternary ammonium salt polymer is preferably about

30,000 to 1,000,000 from the viewpoint of enhancing the catalytic activity, and the weight average molecular weight of the diallyl quaternary ammonium salt/acrylamide copolymer is preferably about 30,000 to 2,000,000, more preferably about 1,000,000 to 2,000,000 from the viewpoint of enhancing the catalytic activity.
Examples of commercially available products of (c) include "Merquat 100 Polymer" (manufactured by The Lubrizol Corporation) and "Merquat 550 Polymer" (manufactured by The Lubrizol Corporation).

(d) (Meth)acryloyloxyethyl quaternary ammonium salt polymer and (meth)acryloyloxyethyl quaternary ammonium salt/acrylamide copolymer:

The weight average molecular weight (Mw) of the methacryloyloxyethyl quaternary ammonium salt/acrylamide copolymer is preferably about 100,000 to 10,000,000, more preferably about 2,000,000 to 6,000,000 from the viewpoint of enhancing the catalytic activity.

(e) Dimethylamine epichlorohydrin polymer (poly-2-hydroxypropyldimethylammonium chloride):

The weight average molecular weight of the dimethylamine epichlorohydrin polymer is preferably about 1,000 to 100,000, more preferably about 3,000 to 10,000 from the viewpoint of enhancing the catalytic activity.
Examples of commercially available products of (e) include "Catiomaster PD-7" (manufactured by Yokkaichi Chemical Co., Ltd.).
As the anionic polymer, a polymer having a sulfuric acid group, a sulfonic acid group, a phosphonic acid group, a phosphoric acid group, or a carboxy group is preferable, among these, a polymer having a sulfonic acid group (sulfonic acid-based polymer) or a polymer having a carboxy group (carboxylic acid-based polymer) is preferable from the viewpoint of enhancing the catalytic activity.
As the polymer having a sulfonic acid group, sodium polystyrene sulfonate is preferable.
As the carboxylic acid-based polymer, a carboxylic acid-based polymer having a structural unit derived from an anionic group-containing monomer selected from an acrylate, a methacrylate, or a maleate is preferable.
The carboxylic acid-based polymer is preferably a polymer composed of the anionic group-containing monomer, but may be a copolymer of the anionic group-containing monomer and a monomer other than the anionic group-containing monomer.
Examples of the monomer other than the anionic group-containing monomer include (meth)acrylic acid alkyl esters such as methyl (meth)acrylate and ethyl (meth)acrylate; N-substituted (meth)acrylamides such as N,N-dimethyl(meth)acrylamide, N,N-diethyl(meth)acrylamide, isopropyl(meth)acrylamide, and tert-butyl(meth)acrylamide, vinyl ethers such as methyl vinyl ether and butyl vinyl ether, styrene and the like, and olefin-based hydrocarbons such as ethylene, propylene, and isobutylene. These may be used singly or in combination of two or more kinds thereof. Among these, (meth)acrylic acid alkyl esters such as methyl (meth)acrylate and ethyl (meth)acrylate are preferable.
In the present specification, "(meth)acrylic" means "acrylic or methacrylic".
The weight average molecular weight (Mw) of the carboxylic acid-based polymer is preferably 1,000 or more, more preferably 5,000 or more, still more preferably 10,000 or more from the viewpoint of enhancing the catalytic activity. The weight average molecular weight (Mw) of the carboxylic acid-based polymer is preferably 500,000 or less, more preferably 100,000 or less, still more preferably 50,000 or less, still even more preferably 35,000 or less from the same viewpoint.
The weight average molecular weight (Mw) of the polymer having a sulfonic acid group is preferably 10,000 or more, more preferably 50,000 or more, still more preferably 100,000 or more from the viewpoint of enhancing the catalytic activity. The weight average molecular weight (Mw) of the polymer having a sulfonic acid group is preferably 5,000,000 or less, more preferably 2,000,000 or less, still more preferably 1,000,000 or less, still even more preferably 600,000 or less from the same viewpoint.
The weight average molecular weights (Mw) of the cationic polymer and the anionic polymer in the present specification are values determined by gel permeation chromatography (GPC) using polystyrene as a standard substance.
In the step 2', the amount of the ionic polymer used is preferably 5 parts by mass or more, and more preferably 10 parts by mass or more based on 100 parts by mass of the oxygen-evolution photocatalyst to which a solid state mediator into which the ionic group is introduced is joined (supported) from the viewpoint of enhancing the catalytic activity. From the same viewpoint, the amount of the ionic polymer used is preferably 500 parts by mass or less, and more preferably 100 parts by mass or less.

<Step 3>

In order to introduce an ionic polymer having a charge opposite to the charge of the ionic group into the hydrogen-evolution photocatalyst, for example, in a case where the ionic group of the solid state mediator in the step 2 is an anionic group, an ionic polymer having an opposite charge may be introduced by mixing and dispersing the hydrogen-evolution photocatalyst using a polymer having a cationic group.

An ionic polymer having an opposite charge may also be introduced by mixing and dispersing the hydrogen-evolution photocatalyst using a polymer having an anionic group, and then mixing and dispersing again the hydrogen-evolution photocatalyst with a polymer having a cationic group.

In other words, the heterojunction photocatalyst is a heterojunction photocatalyst having a solid state mediator between a hydrogen-evolution photocatalyst and an oxygen-evolution photocatalyst, in which the solid state mediator has an ionic group and an ionic polymer B, the ionic group is bonded to the ionic polymer B, the hydrogen-evolution photocatalyst has an ionic polymer A having a charge opposite to the charge of the ionic polymer B, and the solid state mediator and the hydrogen-evolution photocatalyst are joined to each other by ionic bonding between the ionic polymer B of the solid state mediator and the ionic polymer A of the hydrogen-evolution photocatalyst.

This means that the ionic polymer of the hydrogen-evolution photocatalyst is an ionic polymer A, the solid state mediator has the ionic group and an ionic polymer B having a charge opposite to the charge of the ionic polymer A, the ionic group is bonded to the ionic polymer B, and the solid state mediator and the hydrogen-evolution photocatalyst are joined to each other by ionic bonding between the ionic polymer B of the solid state mediator and the ionic polymer A of the hydrogen-evolution photocatalyst.

In a case where the ionic group is an anionic group, the ionic polymer A is an anionic polymer and the ionic polymer B is a cationic polymer. In a case where the ionic group is a cationic group, the ionic polymer A is a cationic polymer and the ionic polymer B is an anionic polymer.

<Step 3’>

In order to introduce an ionic polymer having a charge opposite to the charge of the ionic group into the hydrogen-evolution photocatalyst, for example, in a case where the ionic group of the solid state mediator in the step 2’ is an anionic group, the solid state mediator has a cationic polymer by further mixing and dispersing using a polymer having a cationic group, and an ionic polymer having an opposite charge may be introduced by mixing and dispersing the hydrogen-evolution photocatalyst using a polymer having an anionic group.

An ionic polymer having an opposite charge may also be introduced by mixing and dispersing the hydrogen-evolution photocatalyst using a polymer having a cationic group, and then mixing and dispersing again the hydrogen-evolution photocatalyst with a polymer having an anionic group.

In other words, the heterojunction photocatalyst is a heterojunction photocatalyst having a solid state mediator between a hydrogen-evolution photocatalyst and an oxygen-evolution photocatalyst, in which the solid state mediator has an ionic group and an ionic polymer B, the ionic group is bonded to the ionic polymer B, the hydrogen-evolution photocatalyst has an ionic polymer A having a charge opposite to the charge of the ionic polymer B, and the solid state mediator and the hydrogen-evolution photocatalyst are joined to each other by ionic bonding between the ionic polymer B of the solid state mediator and the ionic polymer A of the hydrogen-evolution photocatalyst.

This means that the ionic polymer of the hydrogen-evolution photocatalyst is an ionic polymer A, the solid state mediator has the ionic group and an ionic polymer B having a charge opposite to the charge of the ionic polymer A, the ionic group is bonded to the ionic polymer B, and the solid state mediator and the hydrogen-evolution photocatalyst are joined to each other by ionic bonding between the ionic polymer B of the solid state mediator and the ionic polymer A of the hydrogen-evolution photocatalyst.

In a case where the ionic group is an anionic group, the ionic polymer A is an anionic polymer and the ionic polymer B is a cationic polymer. In a case where the ionic group is a cationic group, the ionic polymer A is a cationic polymer and the ionic polymer B is an anionic polymer.

As the ionic polymer, the anionic polymer or cationic polymer in the aspect 2 described above can be used.

In the step 3 and the step 3’, with respect to 100 parts by mass of the hydrogen-evolution photocatalyst, the ionic polymer is contained (mixed) by preferably 5 parts by mass or more, more preferably 20 parts by mass or more from the viewpoint of enhancing the catalytic activity and preferably 500 parts by mass or less, more preferably 100 parts by mass or less from the same viewpoint, is preferably contained (mixed) by 5 parts by mass or more and 500 parts by mass or less, and is more preferably used by 20 parts by mass or more and 100 parts by mass or less.

<Step 4> and <Step 4’>

In the step 4 and the step 4’, by mixing the hydrogen-evolution photocatalyst obtained in the step 3 or step 3’ into which the ionic polymer is introduced together with the oxygen-evolution photocatalyst to which a solid state mediator having the ionic group is joined (supported), an oxygen-evolution photocatalyst and a hydrogen-evolution photocatalyst can be joined to each other via a solid state mediator.

For example, a hydrogen-evolution photocatalyst into which a cationic group derived from a cationic polymer is introduced may be used in a case of using an oxygen-evolution photocatalyst to which a solid state mediator into which an anionic group is introduced is joined (supported), and a hydrogen-evolution photocatalyst into which an anionic group derived from an anionic polymer is introduced may be used in a case of using an oxygen-evolution photocatalyst to which a solid state mediator into which a cationic group is introduced is joined (supported).

In the step 4, the mixed mass ratio (hydrogen-evolution photocatalyst obtained in the step 3 into which the ionic polymer is introduced/oxygen-evolution photocatalyst obtained in the step 2 to which a solid state mediator having the ionic group is joined (supported)) is preferably 0.01 or more, more preferably 0.05 or more, still more preferably 0.07 or more from the viewpoint of enhancing the catalytic activity, preferably 10 or less, more preferably 5 or less, still more preferably 1 or less from the same viewpoint, and preferably 0.01 or more and 10 or less, more preferably 0.05 or more and 5 or less, still more preferably 0.07 or more and 1 or less.

In the step 4', the mixed mass ratio (hydrogen-evolution photocatalyst obtained in the step 3' into which the ionic polymer is introduced/oxygen-evolution photocatalyst obtained in the step 2' to which a solid state mediator having the ionic polymer is joined) is preferably 0.01 or more, more preferably 0.05 or more, still more preferably 0.07 or more from the viewpoint of enhancing the catalytic activity, preferably 10 or less, more preferably 5 or less, still more preferably 1 or less from the same viewpoint, and preferably 0.01 or more and 10 or less, more preferably 0.05 or more and 5 or less, still more preferably 0.07 or more and 1 or less.

In the step 4 and step 4', by adjusting the mixed mass ratio to the above range, in both of the aspects 1 and the aspects 2, the solid state mediator and the hydrogen-evolution photocatalyst are joined to each other via an ionic polymer. As the solid state mediator and the hydrogen-evolution photocatalyst are joined to each other via the ionic polymer, strong electrostatic interaction acts and the hydrogen-evolution photocatalyst and the oxygen-evolution photocatalyst are not separated from each other but are joined to each other via the solid state mediator, and thus the catalytic activity is improved and water can be decomposed into oxygen and hydrogen with high water splitting reaction efficiency.

(Coverage of solid state mediator to electrons collecting surface area of oxygen-evolution photocatalyst)

The coverage of the solid state mediator to the electrons collecting surface area of the oxygen-evolution photocatalyst is preferably 40% or more, more preferably 50% or more, still more preferably 55% or more, and still even more preferably 58% or more from the viewpoint of enhancing the catalytic activity. The upper limit is preferably 100% or less, more preferably 95% or less, and still more preferably 90% or less from the viewpoint of improving the adhesive properties of the solid state mediator and the light transmittance.

The coverage of the solid state mediator to the electrons collecting surface area of the oxygen-evolution photocatalyst is preferably 40% or more and 100% or less, more preferably 50% or more and 95% or less, still more preferably 55% or more and 90% or less from the viewpoint of enhancing the catalytic activity and the viewpoint of improving the adhesive properties of the solid state mediator and the light transmittance.

By using the production method in the step 1, that is, at least one method selected from the group consisting of a photoelectrodeposition method, an impregnation supporting method, and a precipitation method, in each of which an organic carboxylic acid compound and a solid state mediator or a precursor of the solid state mediator are used, the coverage can be controlled to be 40% or more. Then, for example, the content of the organic carboxylic acid compound with respect to the solid state mediator or a precursor of the solid state mediator can be increased, and the coverage can be further increased by increasing the light irradiation time in the photoelectrodeposition method.

(Heterojunction selectivity of solid state mediator to electrons collecting surface of oxygen-evolution photocatalyst)

The heterojunction selectivity of the solid state mediator to the electrons collecting surface of the oxygen-evolution photocatalyst is preferably 60% or more, more preferably 70% or more, still more preferably 80% or more, and still even more preferably 90% or more from the viewpoint of enhancing the catalytic activity. From the viewpoint of production, the heterojunction selectivity is 100% or less, and preferably 99.5% or less.

The heterojunction selectivity can be improved, for example, depending on the type of the production method of the step 1, and specifically, it is preferable to use a photoelectrodeposition method.

The coverage and the heterojunction selectivity can be determined by the methods in Examples described below.

<Method for producing oxygen-evolution photocatalyst>

The method for producing an oxygen-evolution photocatalyst is the same method for producing as the step 1 of the method for producing a heterojunction photocatalyst.

<Photocatalyst composite>

The photocatalyst composite of the present invention has the heterojunction photocatalyst on a substrate.

The substrate is not particularly limited as long as the heterojunction photocatalyst can be immobilized on the surface of the substrate. Examples of the substrate include a ceramic substrate such as alumina; a glass substrate such as soda lime glass or borosilicate glass; a quartz substrate; a metal substrate such as titanium, copper, tin, iron, aluminum, or stainless steel; an organic substrate such as methacrylic resin, acrylic resin, urethane resin, phenol resin, melamine resin, urea resin, polyester resin, polycarbonate resin, fluororesin, polyethylene, polypropylene, polystyrene, polyamide, polyimide, polyacetal, polyvinyl chloride, or polyvinylidene chloride; a fiber substrate such as glass fiber or carbon fiber; a natural substrate such as paper, bamboo, or wood; and the like.

The substrate preferably has pores, and more preferably has continuous pores. With such a configuration, the supply of water at the interface between the substrate and the heterojunction photocatalyst can be promoted, and hydrogen gas generated by a water splitting reaction on the surface of the heterojunction photocatalyst can reach the outside through the pores, and hydrogen gas can be more efficiently produced. The substrate is preferably transparent, and more preferably has a transmittance of 50% or more in a visible light region. As a result, the heterojunction photocatalyst also absorbs light with respect to the light source incident from the substrate surface, and hydrogen gas can be more efficiently produced.

The method for producing the photocatalyst composite is not particularly limited, and examples thereof include (1) a method in which a dispersion containing the heterojunction photocatalyst is applied onto a substrate, dried, and fired as necessary to immobilize the heterojunction photocatalyst on the substrate, (2) a method in which a dispersion containing the oxygen-evolution photocatalyst is applied onto a substrate, dried, and fired as necessary to immobilize the oxygen-evolution photocatalyst on the substrate, then the solid state mediator is joined to the surface of the oxygen-evolution photocatalyst by the same method as described above, and then the hydrogen-evolution photocatalyst is joined to the surface of the solid state mediator, and the like.

<Applications of heterojunction photocatalyst and photocatalyst composite>

The heterojunction photocatalyst and photocatalyst composite of the present invention can be used not only as a photocatalyst that catalyzes the decomposition reaction of water or alcohols, but also as a photocatalyst that catalyzes the decomposition reaction of organic substances, and for example, can be used as an environmental purifier, an antibacterial/bactericidal agent, a deodorant, an antifouling agent, or the like for detoxifying harmful organic compounds, bacteria, offensive odor substances, inorganic compounds (ammonium ion, ammonia, nitrate ion, nitrite ion, and the like), and the like.

<Method for producing hydrogen>

The method for producing hydrogen using the heterojunction photocatalyst or photocatalyst composite of the present invention is not particularly limited, and examples thereof include a method for producing hydrogen, which includes a step of irradiating the heterojunction photocatalyst or the photocatalyst composite with light in the presence of water or an alcohol to cause the decomposition reaction of the water or alcohol, thereby generating at least hydrogen.

The light to be emitted may be either sunlight or artificial light (fluorescent lamp, UV lamp, LED, mercury lamp, xenon lamp, metal halide lamp, sodium lamp, halogen lamp, and the like).

The wavelength of light is preferably 180 to 1,000 nm, and more preferably 300 to 800 nm from the viewpoint of promoting the decomposition reaction.

The irradiance of the light irradiation is preferably 1 $\mu W/m^2$ or more, and more preferably 1 $mW/m^2$ or more from the viewpoint of promoting the decomposition reaction.

The reaction temperature is preferably 0°C or higher, and more preferably 15°C or higher from the viewpoint of promoting the decomposition reaction.

The amount of hydrogen generated (per 55 mg of catalyst amount) using the heterojunction photocatalyst or photocatalyst composite of the present invention is preferably 0.05 ($\mu mol \cdot h^{-1}$) or more, more preferably 0.1 ($\mu mol \cdot h^{-1}$) or more, still more preferably 0.15 ($\mu mol \cdot h^{-1}$) or more, and the upper limit thereof is not particularly limited but is preferably 1 ($mol \cdot h^{-1}$) or less.

Regarding the embodiment described above, the present invention further discloses the following aspects.

[1] A heterojunction photocatalyst comprising a solid state mediator between a hydrogen-evolution photocatalyst containing an organic semiconductor and an oxygen-evolution photocatalyst, wherein the hydrogen-evolution photocatalyst and the solid state mediator are joined, and the oxygen-evolution photocatalyst and the solid state mediator are joined.

[2] The heterojunction photocatalyst according to [1] , wherein the solid state mediator is joined to an electrons collecting surface of the oxygen-evolution photocatalyst.

[3] The heterojunction photocatalyst according to [1] or [2], wherein a heterojunction selectivity of the solid state mediator to the electrons collecting surface of the oxygen-evolution photocatalyst is 60% or more.

[4] The heterojunction photocatalyst according to any one of [1] to [3], wherein a coverage of the solid state mediator to an electrons collecting surface area of the oxygen-evolution photocatalyst is 40% or more.

[5] The heterojunction photocatalyst according to any one of [1] to [4], wherein the organic semiconductor is a covalent organic framework.

[6] The heterojunction photocatalyst according to [5], wherein a topology diagram constituting the covalent organic framework is one or two or more selected from (1) a hexagonal topology, (2) a tetragonal topology, (3) a rhombic topology, and (4) a triangular topology, and is preferably (1) the hexagonal topology.

[7] The heterojunction photocatalyst according to [5] or [6], wherein the covalent organic framework has preferably one or two or more linkage types selected from (10) a boroxine linkage, (11) a boronic acid ester linkage, (12) a borazine linkage, (13) an imide linkage, (14) an amide linkage, (15) a dioxin linkage, (16) an imine linkage, (17) a hydrazone linkage, (18) an azine linkage, (19) an oxazole linkage, (20) a thiazole linkage, (21) a squaraine linkage, (22) a triazine linkage linkage, (23) a phenazine linkage, (24) an amino linkage, and (25) an olefin linkage, more preferably has one or two or more linkage types selected from (16) the imine linkage and (24) the amino linkage, and still more preferably has a linkage type of (16) the imine linkage.

[8] The heterojunction photocatalyst according to any one of [1] to [7], wherein the hydrogen-evolution photocatalyst has a cocatalyst.

[9] The heterojunction photocatalyst according to [8], wherein the cocatalyst is preferably one or two or more selected from transition metals, more preferably one or two or more selected from metals belonging to Group 8 to 10 of the periodic table, still more preferably one or two or more selected from metals belonging to the iron group and the platinum group, still even more preferably one or two or more selected from metals belonging to the platinum group, and still even more preferably Ru.

[10] The heterojunction photocatalyst according to any one of [1] to [9], wherein the oxygen-evolution photocatalyst is preferably one or two or more selected from oxides containing an element selected from elements belonging to Group 14 and elements belonging to Group 15 of the periodic table, more preferably one or two or more selected from oxides containing an element selected from Bi, Pb, Sb, and Sn, still more preferably one or two or more selected from oxides containing Bi, still even more preferably contains $BiVO_4$, and is still even more preferably $BiVO_4$.

[11] The heterojunction photocatalyst according to any one of [1] to [10], wherein the solid state mediator is preferably one or two or more selected from transition metals or compounds thereof, more preferably one or two or more selected from transition metals containing an element belonging to Group 11 of the periodic table or compounds thereof, still more preferably one or two or more selected from Au and Ag, and still even more preferably contains Au.

[12] The heterojunction photocatalyst according to any one of [1] to [11], wherein

the hydrogen-evolution photocatalyst contains a covalent organic framework,
a topology diagram constituting the covalent organic framework is one or two or more selected from (1) a hexagonal topology, (2) a tetragonal topology, (3) a rhombic topology, and (4) a triangular topology,
the covalent organic framework has one or two or more linkage types selected from (10) a boroxine linkage, (11) a boronic acid ester linkage, (12) a borazine linkage, (13) an imide linkage, (14) an amide linkage, (15) a dioxin linkage, (16) an imine linkage, (17) a hydrazone linkage, (18) an azine linkage, (19) an oxazole linkage, (20) a thiazole linkage, (21) a squaraine linkage, (22) a triazine linkage, (23) a phenazine linkage, (24) an amino linkage, and (25) an olefin linkage,
the oxygen-evolution photocatalyst is one or two or more selected from oxides containing an element selected from elements belonging to Group 14 and elements belonging to Group 15 of the periodic table, and
the solid state mediator contains one or two or more selected from one or two or more transition metals selected from Au, Ag, Cu, Ni, Ti, Mn, Rh, Pd, Ru, and Ir, one or two or more transition metal compounds selected from an oxide, a nitride, and a carbide of the transition metal, and one or two or more doped metal oxides selected from a tin-doped indium oxide (ITO), a metal (B, Al, Ga)-doped zinc oxide, a fluorine-doped tin oxide, and an antimony-doped tin oxide.

[13] The heterojunction photocatalyst according to any one of [1] to [11], wherein

the hydrogen-evolution photocatalyst contains a covalent organic framework,
a topology diagram constituting the covalent organic framework is one or two or more selected from (1) a hexagonal topology, (2) a tetragonal topology, (3) a rhombic topology, and (4) a triangular topology,
the covalent organic framework has one or two or more linkage types selected from (16) an imine linkage and (24)

an amino linkage,
the hydrogen-evolution photocatalyst has a cocatalyst,
the cocatalyst of the hydrogen-evolution photocatalyst is one or two or more selected from metals belonging to Group 8 to 10 of the periodic table and compounds thereof,
the oxygen-evolution photocatalyst is one or two or more selected from oxides containing an element selected from Bi, Pb, Sb, and Sn, and
the solid state mediator contains one or two or more selected from transition metals containing an element belonging to Group 11 of the periodic table or compounds thereof.

[14] The heterojunction photocatalyst according to any one of [1] to [11], wherein

the hydrogen-evolution photocatalyst contains a covalent organic framework,
a topology diagram constituting the covalent organic framework is one or two or more selected from (1) a hexagonal topology, (2) a tetragonal topology, (3) a rhombic topology, and (4) a triangular topology,
the covalent organic framework has one or two or more linkage types selected from (16) an imine linkage and (24) an amino linkage,
the hydrogen-evolution photocatalyst has a cocatalyst,
the cocatalyst of the hydrogen-evolution photocatalyst is one or two or more selected from Pt, Pd, Ru, Ni, Fe, Ir, Rh, and compounds thereof,
the oxygen-evolution photocatalyst is one or two or more selected from oxides containing Bi, and
the solid state mediator contains one or two or more selected from transition metals containing an element belonging to Group 11 of the periodic table or compounds thereof.

[15] The heterojunction photocatalyst according to any one of [1] to [11], wherein

the hydrogen-evolution photocatalyst contains a covalent organic framework,
a topology diagram constituting the covalent organic framework is one or two or more selected from (1) a hexagonal topology, (2) a tetragonal topology, (3) a rhombic topology, and (4) a triangular topology,
the covalent organic framework has one or two or more linkage types selected from (16) an imine linkage and (24) an amino linkage,
the hydrogen-evolution photocatalyst has a cocatalyst,
the cocatalyst of the hydrogen-evolution photocatalyst is one selected from Pt, Pd, Ru, Ni, Fe, Ir, Rh, and compounds thereof,
the oxygen-evolution photocatalyst is one or two or more selected from oxides containing Bi, and
the solid state mediator contains one or two or more selected from transition metals containing an element belonging to Group 11 of the periodic table or compounds thereof.

[16] The heterojunction photocatalyst according to any one of [1] to [12], wherein

the hydrogen-evolution photocatalyst contains a covalent organic framework,
a topology diagram constituting the covalent organic framework is (1) a hexagonal topology,
the covalent organic framework has a linkage type of (16) an imine linkage,
the hydrogen-evolution photocatalyst has a cocatalyst,
the cocatalyst of the hydrogen-evolution photocatalyst contains Ru,
the oxygen-evolution photocatalyst is $BiVO_4$, and
the solid state mediator contains Au.

[17] A photocatalyst composite comprising the heterojunction photocatalyst according to any one of [1] to [16] on a substrate.
[18] A method for producing hydrogen, comprising irradiating the heterojunction photocatalyst according to any one of [1] to [16] or the photocatalyst composite according to [17] with light in the presence of water or alcohol.
[19] A method for producing the heterojunction photocatalyst according to any one of [1] to [16], comprising joining the hydrogen-evolution photocatalyst and the solid state mediator and/or joining the oxygen-evolution photocatalyst and the solid state mediator using an ionic polymer as a joining agent.
[20] The method for producing a heterojunction photocatalyst according to [19], the method including the following steps 1 to 4, provided that the steps 2 and 3 are performed in any order:

step 1: a step of joining the solid state mediator onto the oxygen-evolution photocatalyst by at least one method

selected from the group consisting of a photoelectrodeposition method, an impregnation supporting method, and a precipitation method, in each of which an organic carboxylic acid compound and a solid state mediator or a precursor of the solid state mediator are used;
step 2: a step of introducing an ionic group into the solid state mediator to obtain an oxygen-evolution photocatalyst to which a solid state mediator having the ionic group is joined;
step 3: a step of introducing an ionic polymer having a charge opposite to a charge of the ionic group into the hydrogen-evolution photocatalyst; and
step 4: a step of mixing the oxygen-evolution photocatalyst obtained in the step 2 to which a solid state mediator having the ionic group is joined with the hydrogen-evolution photocatalyst obtained in the step 3 into which the ionic polymer is introduced.

[21] The method for producing a heterojunction photocatalyst according to [19],
the method preferably including the steps 1, 2', 3', and 4' below, provided that the steps 2' and 3' are performed in any order:

step 1: a step of joining the solid state mediator onto the oxygen-evolution photocatalyst by at least one method selected from the group consisting of a photoelectrodeposition method, an impregnation supporting method, and a precipitation method, in each of which an organic carboxylic acid compound and a solid state mediator or a precursor of the solid state mediator are used;
step 2': a step of introducing an ionic group into the solid state mediator and further reacting the ionic group with an ionic polymer having a charge opposite to a charge of the ionic group to obtain an oxygen-evolution photocatalyst to which a solid state mediator having the ionic polymer is joined;
step 3': a step of introducing an ionic polymer having a charge opposite to the charge of the ionic polymer into the hydrogen-evolution photocatalyst; and
step 4': a step of mixing the oxygen-evolution photocatalyst obtained in the step 2' to which a solid state mediator having the ionic polymer is joined with the hydrogen-evolution photocatalyst obtained in the step 3' into which the ionic polymer is introduced.

[22] The method for producing a heterojunction photocatalyst according to [20] or [21], in which the ionic group is an anionic group or a cationic group.
[23] The method for producing a heterojunction photocatalyst according to [22], in which the anionic group is a sulfonic acid group, a phosphonic acid group, a phosphoric acid group, or a carboxy group, and the cationic group is an ammonium group.
[24] The method for producing a heterojunction photocatalyst according to any one of [19] to [23], in which the ionic polymer is a cationic polymer or an anionic polymer.
[25] The method for producing a heterojunction photocatalyst according to [24], in which the cationic polymer includes preferably a polymer having a quaternary ammonium group, more preferably one or more selected from a cationized polysaccharide, a polymer or copolymer of diallyl quaternary ammonium salt, a polymer or copolymer of (meth)acryloyloxyethyl quaternary ammonium salt, a polymer or copolymer of (meth)acrylamidopropyl quaternary ammonium salt, or a polymer of dimethylamine epichlorohydrin, still more preferably (a) cationized cellulose, (b) cationized guar gum, (c) one or two or more selected from the group consisting of diallyl quaternary ammonium salt polymer and diallyl quaternary ammonium salt/acrylamide copolymer, (d) (meth)acryloyloxyethyl quaternary ammonium salt polymer and (meth)acryloyloxyethyl quaternary ammonium salt/acrylamide copolymer, or (e) dimethylamine epichlorohydrin polymer.
[26] The method for producing a heterojunction photocatalyst according to [24], in which the anionic polymer includes preferably a polymer having a sulfuric acid group, a sulfonic acid group, a phosphonic acid group, a phosphoric acid group, or a carboxy group, more preferably a polymer having a sulfonic acid group (sulfonic acid-based polymer) or a polymer having a carboxy group (carboxylic acid-based polymer).

## EXAMPLES

Hereinafter, the present invention will be specifically described based on Examples. Unless otherwise specified, reagents manufactured by FUJIFILM Wako Pure Chemical Corporation were used. The following polymers were used.
Anionic polymer 1: POIZ 520, manufactured by Kao Corporation, sodium acrylate/sodium maleate copolymer
Cationic polymer 1: Merquat 100 Polymer, manufactured by The Lubrizol Corporation, poly(diallyldimethylammonium chloride)

[Powder X-ray diffraction (XRD)]

Powder X-ray diffraction (XRD) of the COF was performed using MiniFlexII (manufactured by Rigaku Holdings Corporation) as a powder X-ray diffraction (XRD) apparatus under the following conditions, and the chemical formula (structure) of the COF was confirmed based on the XRD pattern.

(Measurement conditions)

Measurement was performed using a continuous scanning method under the following conditions: X-ray source: Cu-K$\alpha$, voltage: 30 kV, current: 15 mA, sampling width: 0.02, divergence slit: 1.25°, scattering slit: open, receiving slit: 0.15 mm, scanning range: 2$\theta$ = 2 to 40°, and scanning speed: 10°/min.

(Example 1)

[Production of oxygen-evolution photocatalyst]

<Production of bismuth vanadate ($BiVO_4$)>

In 50 mL of 2 mol/L nitric acid, 6.06 g of bismuth nitrate pentahydrate and 1.46 g of ammonium vanadate were dissolved. Thereafter, ammonia water was added dropwise to the solution until the pH reached 2.0, and 0.88 g of sodium chloride was added to obtain a yellow-orange dispersion. The dispersion was transferred to a fluororesin container and reacted in an autoclave at 170°C for 24 hours.

After the reaction, the precipitate was separated by suction filtration, and the obtained precipitate was washed with deionized water, filtered, and dried under reduced pressure. The dried sample was calcined in an electric furnace at 500°C for 2 hours to obtain a yellow powder of $BiVO_4$. SEM (JSM-IT500HR, manufactured by JEOL Ltd.) observation confirmed (magnification: 2000 times) that the produced $BiVO_4$ particles have a decahedral structure with the {010} plane as the basal plane. Powder X-ray diffraction (MiniFlex II diffractometer, manufactured by Rigaku Corporation) confirmed that the crystal system is a monoclinic scheelite.

<Production of Au-$BiVO_4$>

50 mg of the produced $BiVO_4$ was put into a glass container and dispersed in 4 mL of deionized water, 4.8 mg of tetrachloroauric acid tetrahydrate and 1.55 mL of AKYPO RLM-45NV (manufactured by Kao Corporation, polyoxyethylene (4.5) sodium lauryl ether acetate, active ingredient 24%) were added, and the mixture was irradiated with light for 5 minutes using a 300 W solar simulator (manufactured by PECCELL, PEC-L01, current value 7.5 A) while stirring using a stirrer tip. The irradiation light intensity at a wavelength of 435 nm from an optical power meter (H3664, manufactured by HIOKI E.E. CORPORATION) was 150 mW/$cm^2$.

After the reaction, the precipitate was separated by suction filtration, and the obtained precipitate was washed with deionized water, filtered, and dried under reduced pressure to obtain a green powder of Au-$BiVO_4$.

SEM observation showed that the produced Au-$BiVO_4$ particles had an Au layer that was selectively formed on the {010} plane of $BiVO_4$ as shown in Fig. 2.

The obtained observation image was analyzed using ImageJ, and the heterojunction selectivity of Au to the {010} plane with respect to the $BiVO_4$ surface was calculated to be 99% and the coverage of Au on the {010} plane was calculated to be 90%.

<Production of MPA-treated Au-$BiVO_4$>

50 mg of the produced Au-$BiVO_4$ was put into a glass container and dispersed in 5 mL of deionized water, 12 $\mu$L of 3-mercaptopropionic acid (MPA) was added, and stirring was performed for 2 hours using a stirrer tip.

After the reaction, the precipitate was separated by suction filtration to obtain Au-$BiVO_4$ (MPA-treated Au-$BiVO_4$) into which MPA was introduced, as a precipitate.

<Production of cationically modified Au-$BiVO_4$>

The obtained precipitate (MPA-treated Au-$BiVO_4$) was washed with deionized water, and then dispersed in 1 mL of a 50 mmol/L aqueous solution of a cationic polymer 1, and stirring was performed using a stirrer chip for 2 hours.

After the reaction, the precipitate was separated by suction filtration. The obtained precipitate was washed with deionized water and then dried under reduced pressure to obtain a green powder of Au-$BiVO_4$ (cationically modified Au-

$BiVO_4$) into which a cationic polymer was introduced, as an oxygen-evolution photocatalyst. In Table 1, as a joining agent 2 (polymer supported on a solid state mediator), Merquat 100 Polymer (cationic polymer 1) was described.

[Production of hydrogen-evolution photocatalyst]

<Production of COF (COF1)>

168 mg of 2,4,6-triformylphloroglucinol (manufactured by Tokyo Chemical Industry Co., Ltd.) and 281 mg of 4,4'-diamino-[1,1'-biphenyl]-3,3'-dicarbonitrile (manufactured by BLD Pharmatech) were put into a pressure-resistant test tube, and dispersed in 8.0 mL of a mixture of 1,4-dioxane and mesitylene (1 : 1), and ultrasonic treatment was performed for 10 minutes. Thereafter, 2 mL of 6 mol/L acetic acid was added, and ultrasonic dispersion treatment was performed for 10 minutes, followed by freeze-thaw degassing to remove dissolved oxygen.

The test tube was transferred to an oil bath, and heated at 120°C for 3 days under a nitrogen atmosphere.

After the reaction, the precipitate was washed with dimethylformamide, acetone, and tetrahydrofuran in this order, then purified by Soxhlet extraction with tetrahydrofuran, and dried under reduced pressure at 120°C.

150 mg of the dried powder was transferred to a plastic container, the container was filled with zirconia balls (φ 2 mm), and pulverization was performed for 30 minutes with a rotary mixer (MIX ROTOR VMR-5) to obtain an orange powder of COF (COF1).

Fig. 3 shows an SEM image of the COF (COF1) observed after drying, and Fig. 4 shows a powder X-ray diffraction (XRD) pattern of the COF (COF1) observed after drying. Since a peak was observed in the vicinity of 20 = 3.5°, it was confirmed that the synthesized COF (COF1) was a hexagonal crystal. The estimated structure of the COF1 is shown in the following chemical formula.

[Formula 7]

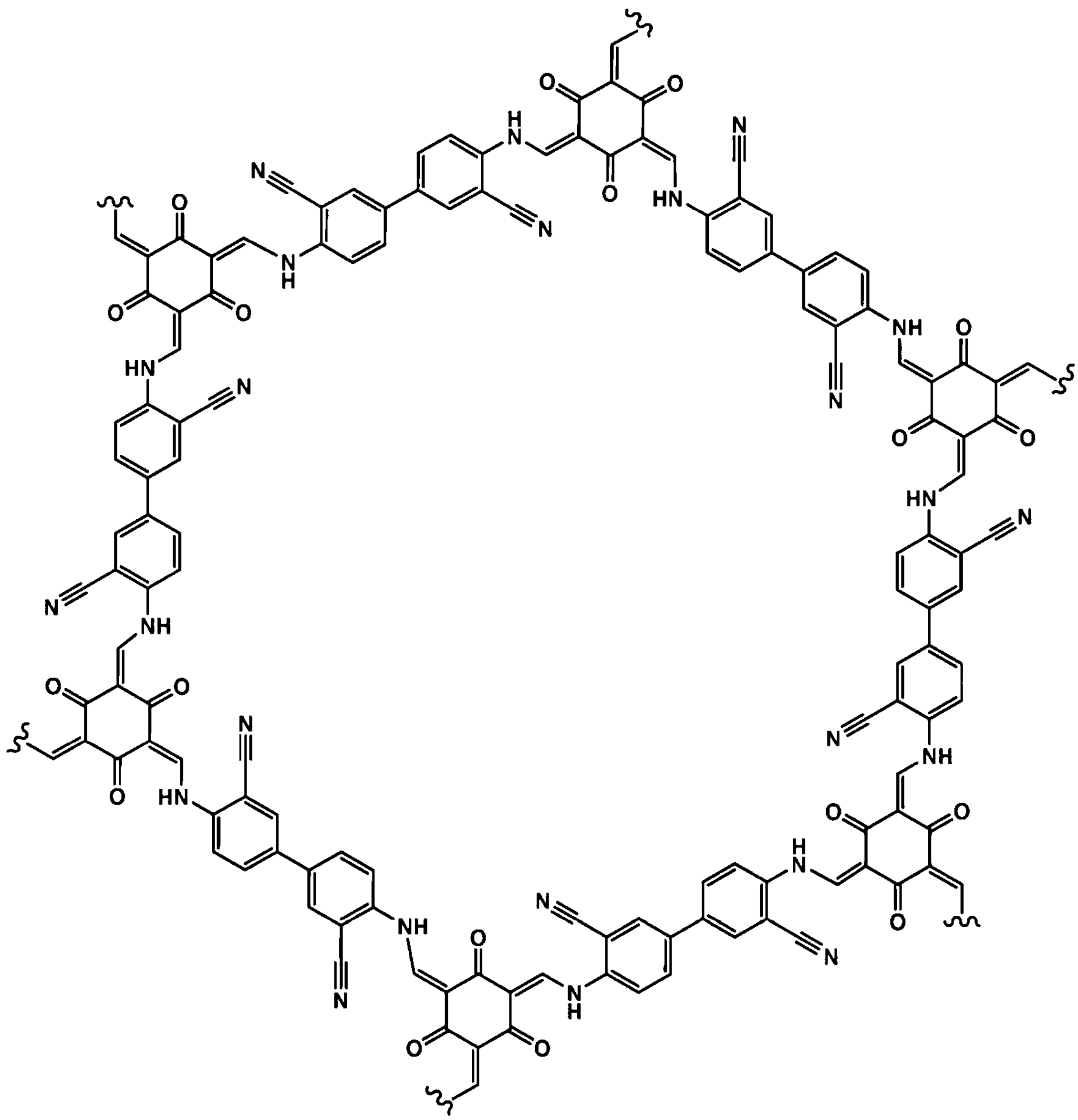

<Production of Ru-supported COF (Ru-supported COF1)>

40 mg of the obtained COF was put into a glass container and dispersed in 3 mL of deionized water, 0.72 mg (0.7 mass%/COF) of ruthenium chloride n-hydrate was added, and ultrasonic dispersion treatment was performed for 15 minutes.

The dispersion was irradiated with light for 120 minutes using a solar simulator (manufactured by Peccell Technologies, Inc.) under stirring, and Ru was supported on the COF.

After the reaction, the precipitate was separated by suction filtration.

The obtained precipitate was washed with deionized water and then dried under reduced pressure to obtain an orange powder of Ru-supported COF (Ru-supported COF1).

<Production of anionically modified Ru-supported COF>

20 mg of the produced Ru-supported COF (Ru-supported COF1) was put into a glass container, and dispersed in

5 mL of a 480 mmol/L aqueous solution of the anionic polymer 1, and ultrasonic irradiation was performed for 30 minutes.

After the reaction, the precipitate was separated by suction filtration. The obtained precipitate was washed with deionized water and then dried under reduced pressure to obtain an orange powder of anionically modified Ru-supported COF as a hydrogen-evolution photocatalyst. In Table 1, as a joining agent 1 (polymer supported on a hydrogen-evolution photocatalyst), POIZ 520 (anionic polymer 1) was described.

<Production of heterojunction photocatalyst>

50 mg of the produced cationically modified Au-$BiVO_4$ and 5 mg of the anionically modified Ru-supported COF were put into a glass container and dispersed in 1 mL of deionized water, and stirring was performed for 30 minutes.

When the resulting dispersion was left to stand after stirring, it was observed that all the particles in the dispersion were settled.

These particles were applied onto a silicon substrate to obtain a heterojunction photocatalyst. Fig. 5 shows an SEM image of the heterojunction photocatalyst observed.

<Evaluation of water splitting activity of heterojunction photocatalyst>

The particles (heterojunction particles) obtained above were added to 180 mL of water, argon gas was bubbled at 20 mL/min for 30 minutes, and then light irradiation was performed using a 300 W xenon lamp. The generated gas was analyzed using a gas chromatograph of a TCD detector. Light irradiation was continuously performed for 4 hours, and the average hydrogen generation rate ($\mu mol\cdot h^{-1}$) was calculated. The results are shown in Table 1.

(Example 2)

<Production of cationically modified Ru-supported COF>

20 mg of the Ru-supported COF (Ru-supported COF1) produced in the same manner as in Example 1 was put into a glass container, and dispersed in 1 mL of a 0.8 mass% aqueous solution of the cationic polymer 1 (polymer pure content: 8.0 mg), and ultrasonic irradiation was performed for 30 minutes.

After the reaction, the precipitate was separated by suction filtration.

The obtained precipitate was washed with deionized water and then dried under reduced pressure to obtain an orange powder of Ru-supported COF (cationically modified Ru-supported COF) into which a cationic polymer was introduced.

<Production of heterojunction photocatalyst>

In the same manner as in Example 1, 50 mg of the produced MPA-treated Au-$BiVO_4$ and 5 mg of cationically modified Ru-supported COF were put into a glass container and dispersed in 1 mL of deionized water, and stirring was performed for 30 minutes to produce a heterojunction photocatalyst, and evaluation was performed. The results are shown in Table 1.

(Example 3)

A heterojunction photocatalyst was produced and evaluated in the same manner as in Example 2 except that 15 mg of anionically modified Ru-supported COF was added in producing the heterojunction photocatalyst. The results are shown in Table 1.

(Example 4)

<Production of anionically modified COF (anionically modified COF1)>

20 mg of the COF (COF1) produced in the same manner as in Example 1 was put into a glass container, and dispersed in 5 mL of a 480 mmol/L aqueous solution of the anionic polymer 1, and ultrasonic irradiation was performed for 30 minutes.

After the reaction, the precipitate was separated by suction filtration. The obtained precipitate was washed with deionized water and then dried under reduced pressure to obtain an orange powder of COF (anionically modified COF1) into which an anionic polymer was introduced, as a hydrogen-evolution photocatalyst.

<Production of heterojunction photocatalyst>

In the same manner as in Example 1, 50 mg of the produced MPA-treated Au-$BiVO_4$ and 5 mg of anionically modified COF were put into a glass container, and dispersed in 1 mL of deionized water, and stirring was performed for 30 minutes to produce a heterojunction photocatalyst, and evaluation was performed. The results are shown in Table 1.

(Example 5)

[Production of hydrogen-evolution photocatalyst]

<Production of COF (COF2)>

71 mg of 4,4',4"-(1,3,5-triazine-2,4,6-triyl)trianiline (manufactured by Tokyo Chemical Industry Co., Ltd.) and 66 mg of tris(4-formylphenyl)amine (manufactured by FUJIFILM Wako Pure Chemical Corporation) were put into a pressure-resistant test tube and dispersed in 6.0 mL of a mixture of 1,4-dioxane and mesitylene (1 : 1), 0.3 mL of 6 mol/L acetic acid was added thereto, and ultrasonic dispersion treatment was performed for 60 minutes. Thereafter, dissolved oxygen was removed by performing freeze-thaw degassing.

The test tube was transferred to an oil bath, and heated at 120°C for 3 days under a nitrogen atmosphere.

After the reaction, the precipitate was washed with acetone and then dried at 80°C.

Fig. 6 shows an SEM image of the COF (COF2) observed after drying, and Fig. 7 shows a powder X-ray diffraction (XRD) pattern. Since a peak was observed in the vicinity of 2θ = 4.3°, it was confirmed that the synthesized COF (COF2) was a hexagonal crystal. The estimated structure of the COF2 is shown in the following chemical formula.

[Formula 8]

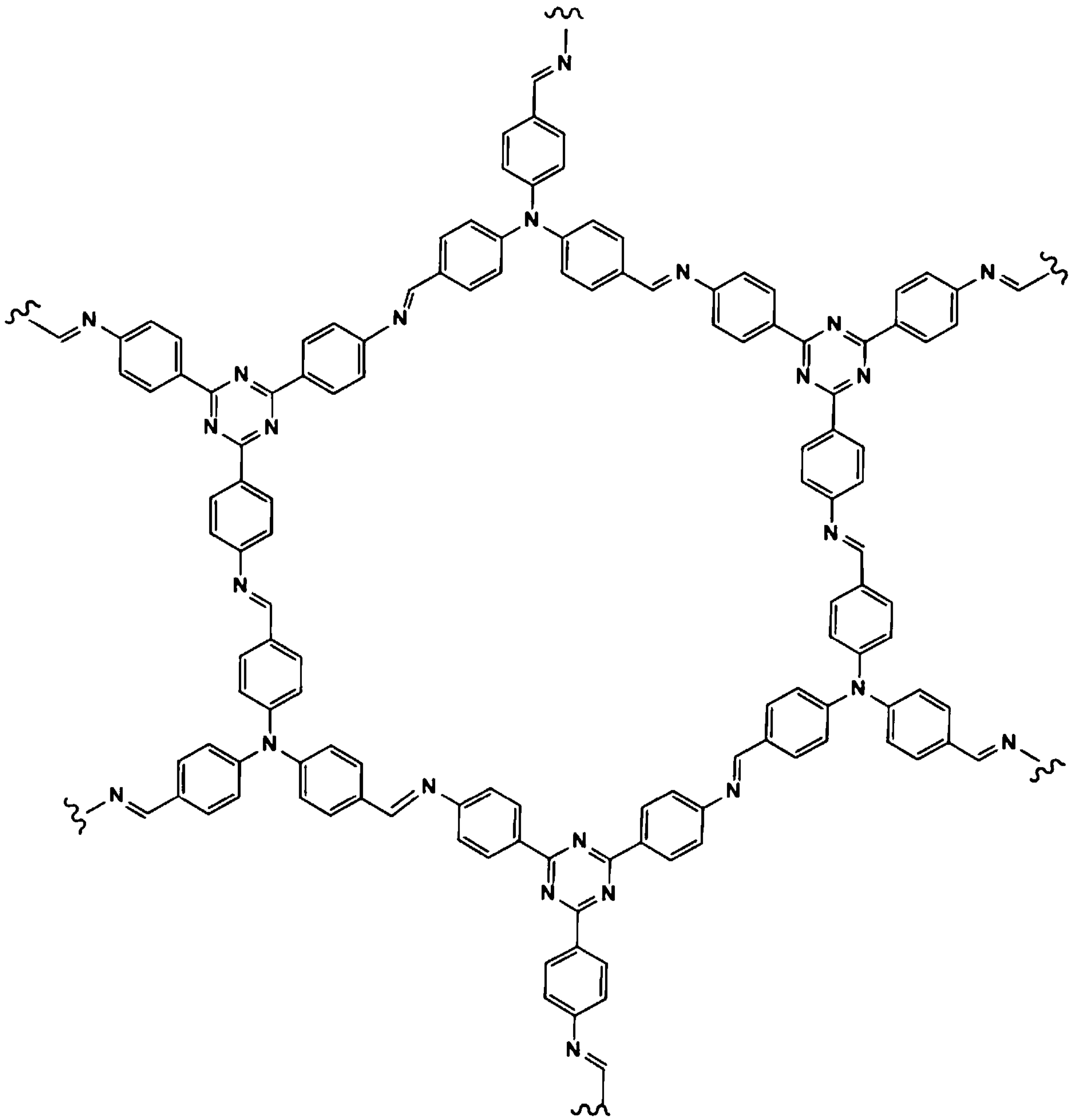

<Production of anionically modified COF (anionically modified COF2)>

20 mg of the produced COF (COF2) was put into a glass container, and dispersed in 5 mL of a 480 mmol/L aqueous solution of the anionic polymer 1, and ultrasonic irradiation was performed for 30 minutes.

After the reaction, the precipitate was separated by suction filtration. The obtained precipitate was washed with deionized water and then dried under reduced pressure to obtain a yellow powder of anionically modified COF (anionically modified COF2) as a hydrogen-evolution photocatalyst.

<Production of heterojunction photocatalyst>

In the same manner as in Example 1, 50 mg of the produced cationically modified Au-$BiVO_4$ and 5 mg of anionically modified COF2 were put into a glass container, and dispersed in 1 mL of deionized water, and stirring was performed for 30 minutes to produce a heterojunction photocatalyst, and evaluation was performed. Fig. 8 shows an SEM image of this heterojunction photocatalyst observed, and Table 1 shows the evaluation results.

(Comparative Example 1)

The water splitting activity of the photocatalyst was evaluated in the same manner as in Example 1 except that only the Ru-supported COF synthesized in Example 1 was used as the photocatalyst. The results are shown in Table 1.

(Comparative Example 2)

The water splitting activity of the photocatalyst was evaluated in the same manner as in Example 1 except that a mixture of Ru-supported COF and Au-$BiVO_4$ was used. The results are shown in Table 1.

(Comparative Example 3)

<Production of MPA-treated $BiVO_4$>

50 mg of $BiVO_4$ produced in the same manner as in Example 1 was put into a glass container and dispersed in 5 mL of deionized water, 12 μL of 3-mercaptopropionic acid (MPA) was added thereto, and stirring was performed for 2 hours with a stirrer chip.

After the reaction, the precipitate was separated by suction filtration to obtain $BiVO_4$ (MPA-treated $BiVO_4$) into which MPA was introduced, as a precipitate.

<Production of cationically modified $BiVO_4$>

The obtained precipitate (MPA-treated $BiVO_4$) was washed with deionized water, and then dispersed in 1 mL of a 50 mmol/L aqueous solution of the cationic polymer 1, and stirring was performed with a stirrer chip for 2 hours.

After the reaction, the precipitate was separated by suction filtration.

The obtained precipitate was washed with deionized water and then dried under reduced pressure to obtain a yellow powder of $BiVO_4$ (cationically modified $BiVO_4$) into which a cationic polymer was introduced.

<Production of heterojunction photocatalyst>

50 mg of the produced cationically modified $BiVO_4$ and 5 mg of anionically modified Ru-supported COF were put into a glass container, and dispersed in 1 mL of deionized water, and stirring was performed for 30 minutes to produce a heterojunction photocatalyst not having a solid state mediator, and evaluation was performed. The results are shown in Table 1.

Table 1 shows the calculation results of the heterojunction selectivity of Au to the {010} plane with respect to the $BiVO_4$ surface and the coverage of Au to the area of the {010} plane, and the evaluation results of water splitting activity for Example 1 and the like.

The obtained SEM image was analyzed according to the following procedure. FIJI, a package developed based on ImageJ (National Institutes of Health), was used as image analysis software.

(Calculation method of heterojunction selectivity of Au to {010} plane with respect to $BiVO_4$ surface)

1. Ten areas corresponding to the {010} plane are randomly trimmed from the SEM image to acquire 10 trimmed image data sets.
2. Ten areas corresponding to the {110} plane and the {011} plane are randomly trimmed from the SEM image to acquire 10 trimmed image data sets.
3. The trainable weka segmentation (TWS) function is activated for all the image data sets and three regions of Au, $BiVO_4$, and background part are specified.
4. Three classifications are learned by TWS.
5. As image data for which the classification has been completed, 10 image data sets for the {010} plane, and 10 image data sets for the {110} plane and the {011} plane are output.
6. The Au covered area on the {010} plane, and the Au covered area on the {110} plane and the {011} plane are respectively calculated from the area values in the analyze particles function from the image data of the Au regions output by TWS classification.
7. The heterojunction selectivity is calculated by the following formula:

Heterojunction selectivity (%) = Au covered area on {010} plane/(Au covered area on {010} plane + Au covered area on {110} plane and {011} plane) $\times$ 100

The average value for 10 images is obtained.

(Method for calculating coverage of Au to area of {010} plane)

1. Ten areas corresponding to the {010} plane are randomly trimmed from the SEM image to acquire 10 trimmed image data sets.
2. The trainable weka segmentation (TWS) function is activated for all the image data sets and three regions of Au, $BiVO_4$, and background part are specified.
3. Three classifications are learned by TWS.
4. Ten classified image data sets are output.
5. The area of the {010} plane is calculated from the area value in the analyze particles function of the trimmed image data, and the Au covered area is calculated from the area value in the same function from the image data of the Au region output by the TWS classification.
6. The coverage is calculated by the following formula:

Coverage (%) = Au covered area/area of {010} plane $\times$ 100

The average value for 10 images is obtained.

[Table 1]

| | (Unit) | Example 1 | Example 2 | Example 3 | Example 4 | Example 5 | Comparative Example 1 | Comparative Example 2 | Comparative Example 3 |
|---|---|---|---|---|---|---|---|---|---|
| Hydrogen-evolution photocatalyst | - | Rusupported COF1 | Rusupported COF1 | Rusupported COF1 | COF1 | COF2 | Rusupported COF1 | Rusupported COF1 | Rusupported COF1 |
| Oxygen-evolution photocatalyst | - | $BiVO_4$ | $BiVO_4$ | $BiVO_4$ | $BiVO_4$ | $BiVO_4$ | None | $BiVO_4$ | $BiVO_4$ |
| Solid state mediator | - | Au | Au | Au | Au | Au | None | Au | None |
| Electrons collecting surface of oxygen-evolution photocatalyst | - | {010} | {010} | {010} | {010} | {010} | - | {010} | {010} |
| Weight ratio of hydrogen-evolution photocatalyst to oxygen-evolution photocatalyst | - | 0.1 | 0.1 | 0.3 | 0.1 | 0.1 | - | 0.1 | 0.1 |
| Heterojunction selectivity of solid state mediator to electrons collecting surface | (%) | 99 | 99 | 99 | 99 | 99 | - | 99 | - |
| Coverage of solid state mediator to electrons collecting surface area | (%) | 90 | 90 | 90 | 90 | 90 | - | 90 | - |
| Joining agent 1 (polymer supported on hydrogen-evolution photocatalyst) | | AP1 | CP1 | CP1 | AP1 | AP1 | CP1 | None | AP1 |
| Joining agent 2 (polymer supported on solid state mediator) | | CP1 | None (MPA) | None (MPA) | CP1 | CP1 | None | None | CP1 |
| Presence or absence of joining between hydrogen-evolution photocatalyst and solid state mediator | | Present | Present | Present | Present | Present | None | None | None |
| Water splitting activity (hydrogen generation rate) | ($\mu mol \cdot h^{-1}$) | 0.21 | 0.09 | 0.15 | 0.09 | 0.20 | 0.01 | 0.01 | 0.01 |

(Note) The description "none (MPA)" in the table indicates that the supported polymer was not used as the joining agent, but MPA was used as the joining agent. AP1 denotes the anionic polymer 1 (trade name: POIZ 520), and CP1 denotes the cationic polymer 1 (trade name: Merquat 100 Polymer).

The evaluation results in Table 1 above show that, in Examples 1 to 5, the hydrogen generation rate was high and the water splitting activity was excellent by using a heterojunction photocatalyst having a solid state mediator between a hydrogen-evolution photocatalyst containing an organic semiconductor and an oxygen-evolution photocatalyst.

On the other hand, the evaluation results in Table 1 show that, in Comparative Example 1, a hydrogen-evolution photocatalyst containing an organic semiconductor was used, but since Comparative Example 1 was not a heterojunction photocatalyst having a solid state mediator between a hydrogen-evolution photocatalyst and an oxygen-evolution photocatalyst, generation of hydrogen was hardly observed and the photocatalyst was not at a practical level.

Further, the evaluation results show that, in Comparative Example 2, since a mixture of Ru-supported COF and Au-$BiVO_4$ was used as a photocatalyst and a joining agent (supported polymer) was not used, Comparative Example 2 was not a "junction" photocatalyst in which a hydrogen-evolution photocatalyst and an oxygen-evolution photocatalyst are joined via a solid state mediator, generation of hydrogen was hardly observed, and the photocatalyst was not at a practical level.

Further, the evaluation results show that, in Comparative Example 3, since Au corresponding to a solid state mediator was not used, and Comparative Example 3 was a heterojunction photocatalyst having no solid state mediator, generation of hydrogen was hardly observed, and the photocatalyst was not at a practical level.

## INDUSTRIAL APPLICABILITY

The heterojunction photocatalyst of the present invention is particularly useful as a photocatalyst used for water splitting or organic matter decomposition, or a photocatalyst for hydrogen production.

## Claims

1. A heterojunction photocatalyst comprising a solid state mediator between a hydrogen-evolution photocatalyst containing an organic semiconductor and an oxygen-evolution photocatalyst, wherein the hydrogen-evolution photocatalyst and the solid state mediator are joined, and the oxygen-evolution photocatalyst and the solid state mediator are joined.

2. The heterojunction photocatalyst according to claim 1, wherein the solid state mediator is joined to an electrons collecting surface of the oxygen-evolution photocatalyst.

3. The heterojunction photocatalyst according to claim 1 or 2, wherein a heterojunction selectivity of the solid state mediator to the electrons collecting surface of the oxygen-evolution photocatalyst is 60% or more.

4. The heterojunction photocatalyst according to any one of claims 1 to 3, wherein a coverage of the solid state mediator to an electrons collecting surface area of the oxygen-evolution photocatalyst is 40% or more.

5. The heterojunction photocatalyst according to any one of claims 1 to 4, wherein the organic semiconductor is a covalent organic framework.

6. The heterojunction photocatalyst according to claim 5, wherein a topology diagram constituting the covalent organic framework is one or two or more selected from (1) a hexagonal topology, (2) a tetragonal topology, (3) a rhombic topology, and (4) a triangular topology, and is preferably (1) the hexagonal topology.

7. The heterojunction photocatalyst according to claim 5 or 6, wherein the covalent organic framework has one or two or more linkage types selected from (10) a boroxine linkage, (11) a boronic acid ester linkage, (12) a borazine linkage, (13) an imide linkage, (14) an amide linkage, (15) a dioxin linkage, (16) an imine linkage, (17) a hydrazone linkage, (18) an azine linkage, (19) an oxazole linkage, (20) a thiazole linkage, (21) a squaraine linkage, (22) a triazine linkage, (23) a phenazine linkage, (24) an amino linkage, and (25) an olefin linkage, preferably has one or two or more linkage types selected from (16) the imine linkage and (24) the amino linkage, and more preferably has a linkage type of (16) the imine linkage.

8. The heterojunction photocatalyst according to any one of claims 1 to 7, wherein the hydrogen-evolution photocatalyst has a cocatalyst.

**9.** The heterojunction photocatalyst according to claim 8, wherein the cocatalyst is one or two or more selected from transition metals, preferably one or two or more selected from metals belonging to Group 8 to 10 of the periodic table, more preferably one or two or more selected from metals belonging to the iron group and the platinum group, still more preferably one or two or more selected from metals belonging to the platinum group, and still even more preferably Ru.

**10.** The heterojunction photocatalyst according to any one of claims 1 to 9, wherein the oxygen-evolution photocatalyst is one or two or more selected from oxides containing an element selected from elements belonging to Group 14 and elements belonging to Group 15 of the periodic table, preferably one or two or more selected from oxides containing an element selected from Bi, Pb, Sb, and Sn, more preferably one or two or more selected from oxides containing Bi, still more preferably contains $BiVO_4$, and is still even more preferably $BiVO_4$.

**11.** The heterojunction photocatalyst according to any one of claims 1 to 10, wherein the solid state mediator is one or two or more selected from transition metals or compounds thereof, preferably one or two or more selected from transition metals containing an element belonging to Group 11 of the periodic table or compounds thereof, more preferably one or two or more selected from Au and Ag, and still more preferably contains Au.

**12.** The heterojunction photocatalyst according to any one of claims 1 to 11, wherein

the hydrogen-evolution photocatalyst contains a covalent organic framework,
a topology diagram constituting the covalent organic framework is one or two or more selected from (1) a hexagonal topology, (2) a tetragonal topology, (3) a rhombic topology, and (4) a triangular topology,
the covalent organic framework has one or two or more linkage types selected from (10) a boroxine linkage, (11) a boronic acid ester linkage, (12) a borazine linkage, (13) an imide linkage, (14) an amide linkage, (15) a dioxin linkage, (16) an imine linkage, (17) a hydrazone linkage, (18) an azine linkage, (19) an oxazole linkage, (20) a thiazole linkage, (21) a squaraine linkage, (22) a triazine linkage, (23) a phenazine linkage, (24) an amino linkage, and (25) an olefin linkage,
the oxygen-evolution photocatalyst is one or two or more selected from oxides containing an element selected from elements belonging to Group 14 and elements belonging to Group 15 of the periodic table, and
the solid state mediator contains one or two or more selected from one or two or more transition metals selected from Au, Ag, Cu, Ni, Ti, Mn, Rh, Pd, Ru, and Ir, one or two or more transition metal compounds selected from an oxide, a nitride, and a carbide of the transition metal, and one or two or more doped metal oxides selected from a tin-doped indium oxide (ITO), a metal (B, Al, Ga)-doped zinc oxide, a fluorine-doped tin oxide, and an antimony-doped tin oxide.

**13.** The heterojunction photocatalyst according to any one of claims 1 to 11, wherein

the hydrogen-evolution photocatalyst contains a covalent organic framework,
a topology diagram constituting the covalent organic framework is one or two or more selected from (1) a hexagonal topology, (2) a tetragonal topology, (3) a rhombic topology, and (4) a triangular topology,
the covalent organic framework has one or two or more linkage types selected from (16) an imine linkage and (24) an amino linkage,
the hydrogen-evolution photocatalyst has a cocatalyst,
the cocatalyst of the hydrogen-evolution photocatalyst is one or two or more selected from metals belonging to Group 8 to 10 of the periodic table and compounds thereof,
the oxygen-evolution photocatalyst is one or two or more selected from oxides containing an element selected from Bi, Pb, Sb, and Sn, and
the solid state mediator contains one or two or more selected from transition metals containing an element belonging to Group 11 of the periodic table or compounds thereof.

**14.** The heterojunction photocatalyst according to any one of claims 1 to 11, wherein

the hydrogen-evolution photocatalyst contains a covalent organic framework,
a topology diagram constituting the covalent organic framework is one or two or more selected from (1) a hexagonal topology, (2) a tetragonal topology, (3) a rhombic topology, and (4) a triangular topology,
the covalent organic framework has one or two or more linkage types selected from (16) an imine linkage and (24) an amino linkage,
the hydrogen-evolution photocatalyst has a cocatalyst,
the cocatalyst of the hydrogen-evolution photocatalyst is one or two or more selected from Pt, Pd, Ru, Ni, Fe, Ir,

Rh, and compounds thereof,
the oxygen-evolution photocatalyst is one or two or more selected from oxides containing Bi, and
the solid state mediator contains one or two or more selected from transition metals containing an element belonging to Group 11 of the periodic table or compounds thereof.

**15.** The heterojunction photocatalyst according to any one of claims 1 to 11, wherein

the hydrogen-evolution photocatalyst contains a covalent organic framework,
a topology diagram constituting the covalent organic framework is one or two or more selected from (1) a hexagonal topology, (2) a tetragonal topology, (3) a rhombic topology, and (4) a triangular topology,
the covalent organic framework has one or two or more linkage types selected from (16) an imine linkage and (24) an amino linkage,
the hydrogen-evolution photocatalyst has a cocatalyst,
the cocatalyst of the hydrogen-evolution photocatalyst is one selected from Pt, Pd, Ru, Ni, Fe, Ir, Rh, and compounds thereof,
the oxygen-evolution photocatalyst is one or two or more selected from oxides containing Bi, and
the solid state mediator contains one or two or more selected from transition metals containing an element belonging to Group 11 of the periodic table or compounds thereof.

**16.** The heterojunction photocatalyst according to any one of claims 1 to 11, wherein

the hydrogen-evolution photocatalyst contains a covalent organic framework,
a topology diagram constituting the covalent organic framework is (1) a hexagonal topology,
the covalent organic framework has a linkage type of (16) an imine linkage,
the hydrogen-evolution photocatalyst has a cocatalyst,
the cocatalyst of the hydrogen-evolution photocatalyst contains Ru,
the oxygen-evolution photocatalyst is $BiVO_4$, and
the solid state mediator contains Au.

**17.** A photocatalyst composite comprising the heterojunction photocatalyst according to any one of claims 1 to 16 on a substrate.

**18.** A method for producing hydrogen, comprising irradiating the heterojunction photocatalyst according to any one of claims 1 to 16 or the photocatalyst composite according to claim 17 with light in the presence of water or alcohol.

**19.** A method for producing the heterojunction photocatalyst according to any one of claims 1 to 16, comprising joining the hydrogen-evolution photocatalyst and the solid state mediator and/or joining the oxygen-evolution photocatalyst and the solid state mediator using an ionic polymer as a joining agent.

Fig.1

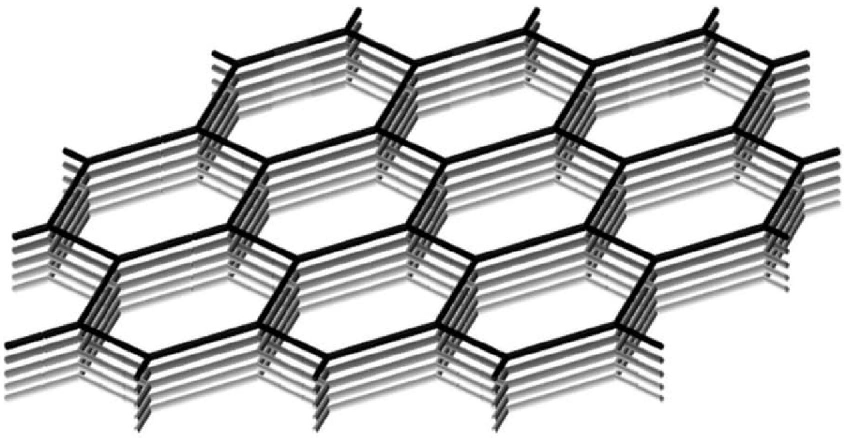

Fig.2

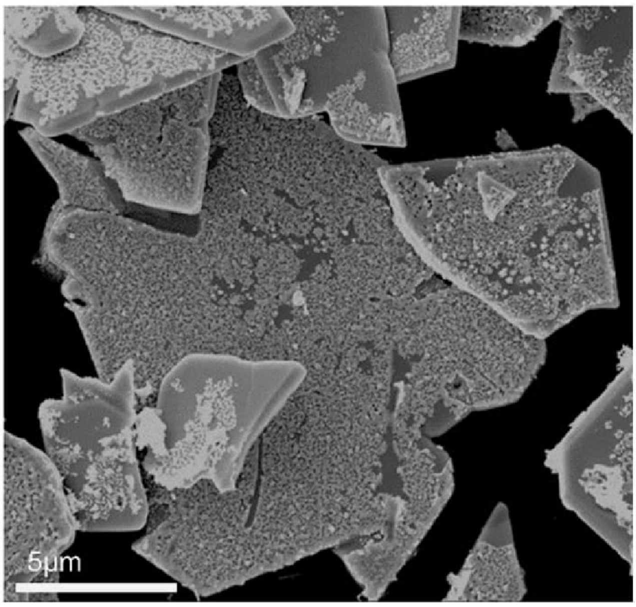

Fig.3

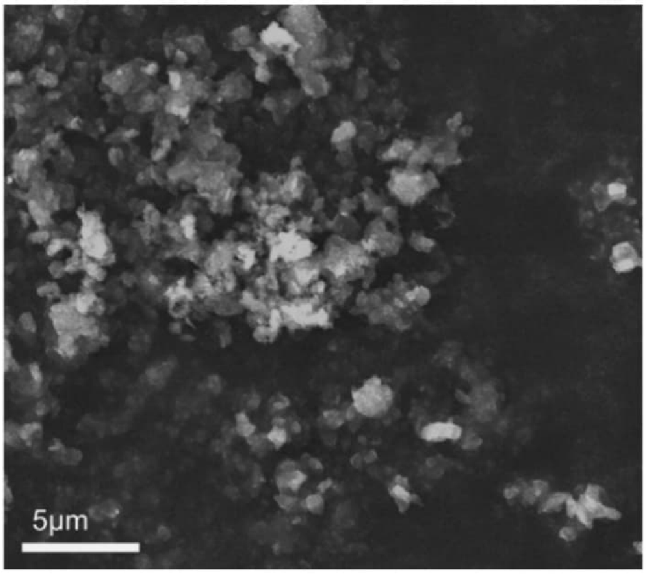


Fig.4

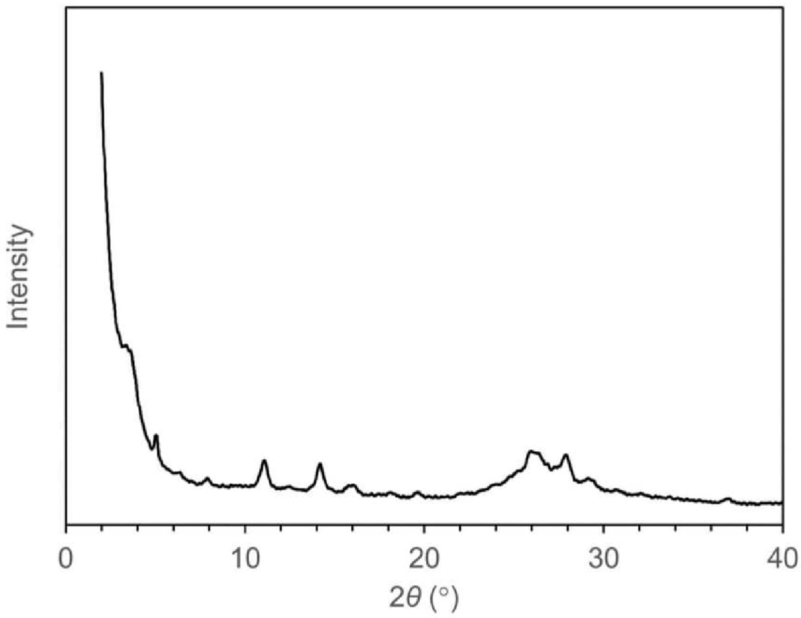

Fig.5

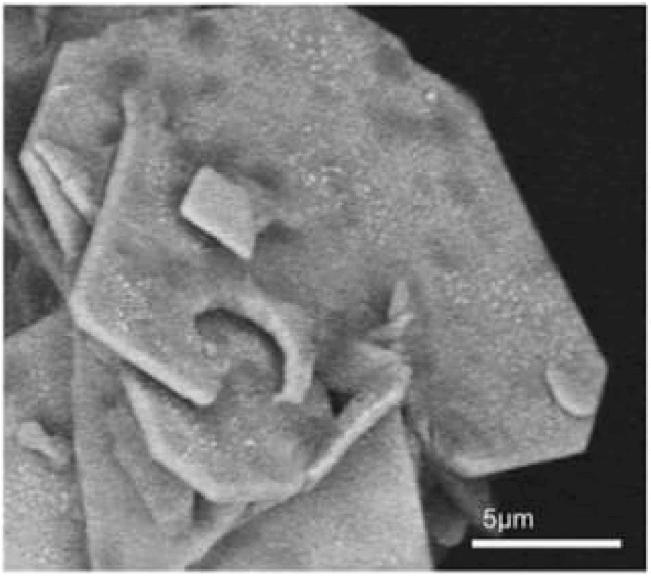


Fig.6

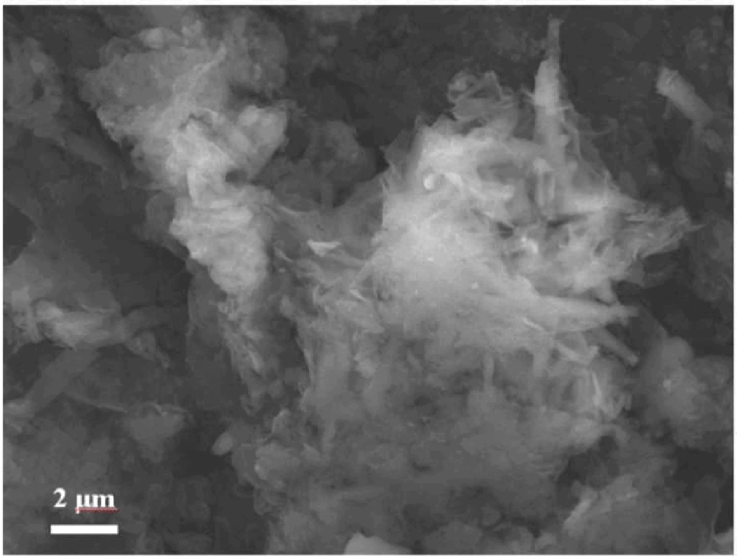

Fig.7

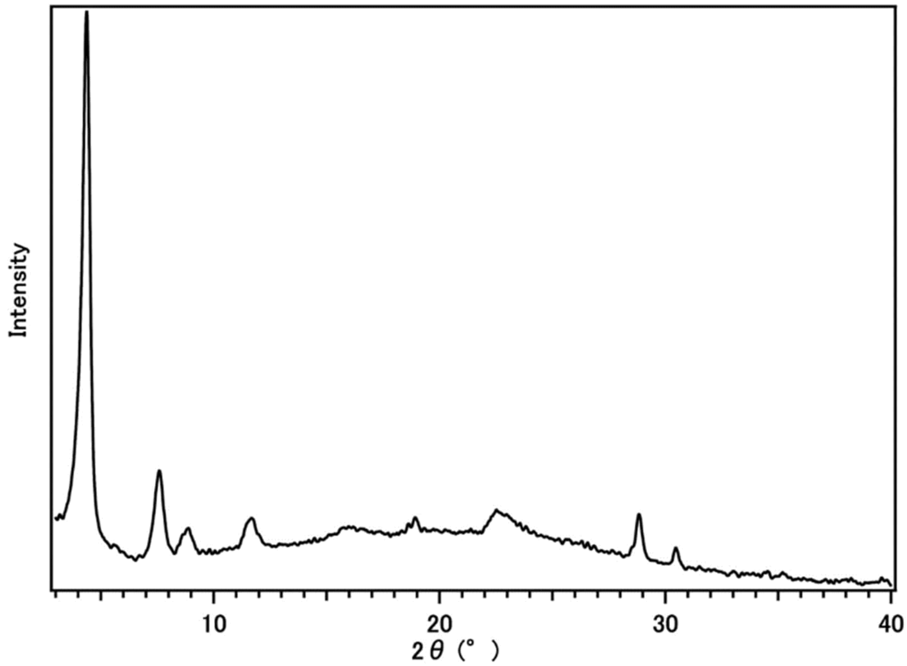


Fig.8

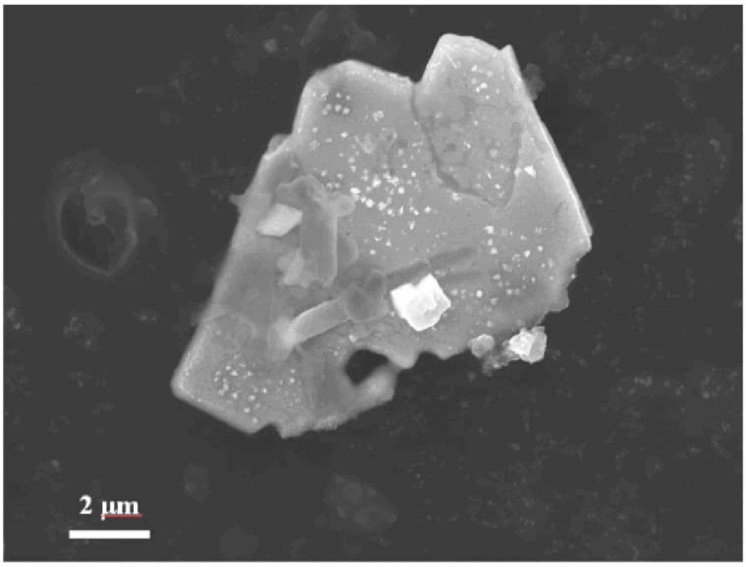

## INTERNATIONAL SEARCH REPORT

International application No.
**PCT/JP2024/030724**

### A. CLASSIFICATION OF SUBJECT MATTER

***B01J 35/39***(2024.01)i; ***B01J 31/36***(2006.01)i; ***C01B 3/04***(2006.01)i; ***C01B 13/02***(2006.01)i
FI: B01J35/39: B01J31/36 M; C01B3/04 A; C01B13/02 B

According to International Patent Classification (IPC) or to both national classification and IPC

### B. FIELDS SEARCHED

Minimum documentation searched (classification system followed by classification symbols)

B01J21/00-38/74; C01B3/04; C01B13/02;C25B1/04,11/087

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JST7580/ JSTChina (JDreamIII)

### C. DOCUMENTS CONSIDERED TO BE RELEVANT

| Category* | Citation of document, with indication, where appropriate, of the relevant passages | Relevant to claim No. |
|---|---|---|
| X | ZENG, Wengao et al. An artificial organic-inorganic Z-scheme photocatalyst WO3@Cu@PDI supramolecular with excellent visible light absorption and photocatalytic activity. Chemical Engineering Journal. 03 September 2019, vol. 381, p. 122691, DOI: 10.1016/j.cej.2019.122691<br>abstract, 1., 2.2.-2.5., 2.8., 3.1., fig. 1, 2, scheme 2 | 1, 2, 11, 17 |
| Y | | 1-4, 8, 9, 11, 17, 18 |
| A | | 5-7, 10, 12-16, 19 |
| Y | WO 2005/063393 A1 (KANSAI TECHNOLOGY LICENSING ORGANIZATION CO., LTD.) 14 July 2005 (2005-07-14)<br>paragraph [0074] | 1-4, 8, 9, 11, 17, 18 |
| Y | WO 2022/045283 A1 (KAO CORPORATION) 03 March 2022 (2022-03-03)<br>claims, paragraphs [0004], [0017]-[0027], [0037]-[0045] | 1-4, 8, 9, 11, 17, 18 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 November 2024** | **26 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
**PCT/JP2024/030724**

**C. DOCUMENTS CONSIDERED TO BE RELEVANT**

| Category* | Citation of document, with indication, where appropriate, of the relevant passages | Relevant to claim No. |
|---|---|---|
| Y | JP 2014-46236 A (KABUSHIKI KAISHA TOYOTA CHUO KENKYUSHO) 17 March 2014 (2014-03-17)<br>claims, paragraphs [0003]-[0004], [0025]-[0026], [0033], [0040]-[0041], [0062], examples, fig. 1, 2 | 1-4, 8, 9, 11, 17, 18 |
| Y | CN 110833864 A (SOUTH CHINA UNIVERSITY OF TECHNOLOGY) 25 February 2020 (2020-02-25)<br>claims 1, 4 | 8,9 |
| A | XU, Meiling et al. Piezo-Photocatalytic Synergy in BiFeO3@COF Z-Scheme Heterostructures for High-Efficiency Overall Water Splitting. Angewandte Chemie-International Edition. vol. 61, e202210700, DOI:10.1002/anie.202210700<br>entire text, all drawings | 1-19 |

Form PCT/ISA/210 (second sheet) (July 2022)

**INTERNATIONAL SEARCH REPORT**
**Information on patent family members**

International application No.
**PCT/JP2024/030724**

| Patent document cited in search report | Publication date (day/month/year) | Patent family member(s) | Publication date (day/month/year) |
|---|---|---|---|
| WO 2005/063393 A1 | 14 July 2005 | TW 200534330 A | |
| WO 2022/045283 A1 | 03 March 2022 | US 2023/0338941 A1<br>claims, paragraphs [0004], [0020]-[0030] , [0040]-[0048]<br>EP 4205847 A1<br>CN 116096671 A | |
| JP 2014-46236 A | 17 March 2014 | (Family: none) | |
| CN 110833864 A | 25 February 2020 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017124394 A
- WO 2022045283 A


### Non-patent literature cited in the description


- **CHUNZHI LI et al.** *Nature Communications*, 2022, vol. 13, 2357
- **M. L. XU et al.** *Angew. Chem. Int. Ed*, 2022, vol. 61, e202210700